(19) **Europäisches Patentamt / European Patent Office / Office européen des brevets**

(11) **EP 4 076 923 B1**

(12) **FASCICULE DE BREVET EUROPEEN**

(45) Date de publication et mention de la délivrance du brevet:
**07.02.2024 Bulletin 2024/06**

(21) Numéro de dépôt: **20841972.1**

(22) Date de dépôt: **04.12.2020**

(51) Classification Internationale des Brevets (IPC):
**B29D 30/30** (2006.01)    **B29D 30/70** (2006.01)
**B29D 30/22** (2006.01)    **B29D 30/16** (2006.01)
**B29D 30/24** (2006.01)    **B29D 30/20** (2006.01)

(52) Classification Coopérative des Brevets (CPC):
**B29D 30/70; B29D 30/1607; B29D 30/22; B29D 30/242; B29D 30/3057;** B29D 2030/202; B29D 2030/204; B29D 2030/241

(86) Numéro de dépôt international:
**PCT/FR2020/052279**

(87) Numéro de publication internationale:
**WO 2021/123541 (24.06.2021 Gazette 2021/25)**

(54) **PROCÉDÉ DE FABRICATION ET DE TRANSFERT D'UN STRATIFIÉ MULTI-NAPPES, APPLICABLE A LA FABRICATION DE RENFORTS ANNULAIRES POUR PNEUMATIQUES**

VERFAHREN ZUR HERSTELLUNG UND ÜBERTRAGUNG EINES MEHRLAGIGEN LAMINATS ZUR ANWENDUNG BEI DER HERSTELLUNG VON RINGFÖRMIGEN VERSTÄRKUNGEN FÜR REIFEN

METHOD FOR MANUFACTURING AND TRANSFERRING A MULTI-PLY LAMINATE, APPLICABLE TO THE MANUFACTURE OF ANNULAR REINFORCEMENTS FOR TYRES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2019 FR 1915074**

(43) Date de publication de la demande:
**26.10.2022 Bulletin 2022/43**

(73) Titulaire: **COMPAGNIE GENERALE DES ETABLISSEMENTS MICHELIN**
**63000 Clermont-Ferrand (FR)**

(72) Inventeurs:
• **DUBOIS, Clément**
**63040 Clermont-Ferrand Cedex 9 (FR)**
• **FUCHS, Olivier**
**63040 Clermont-Ferrand Cedex 9 (FR)**
• **LAFONTAINE, Yvan**
**63040 Clermont-Ferrand Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 0 273 847**    **EP-A2- 0 714 758**
**EP-A2- 1 767 337**    **US-A- 3 841 941**
**US-A1- 2016 229 139**

**Description**

La présente invention concerne le domaine général de la fabrication des bandages pneumatiques, et plus particulièrement des nappes de renfort entrant dans la constitution de tels bandages pneumatiques.

Il est connu de réaliser des nappes de renfort en posant, sur un premier support, dit « support de confection », au moyen d'un outil de pose adapté, une succession de bandelettes qui sont aboutées par leurs lisières et qui comprennent chacune des fils de renforts parallèles noyés dans un matériau à base de caoutchouc cru.

De telles nappes sont ensuite transférées individuellement, au fur et à mesure de leur achèvement, vers un second support, dit « support de conformation », de type tambour ou noyau, qui présente une forme de révolution qui correspond sensiblement aux dimensions, voire à la forme, du bandage souhaité.

Chaque nappe qui vient s'ajouter successivement au support de conformation est enroulée de manière à se refermer en anneau sur elle-même sur ledit support de conformation, de manière à ce que le front avant et le front arrière de ladite nappe se rejoignent en une jonction dite « soudure ».

On obtient ainsi finalement, sur le support de conformation, un stratifié de renfort qui contient plusieurs nappes individuelles superposées en couches annulaires successives.

Si de tels procédés de fabrication présentent notamment l'avantage d'offrir une grande polyvalence, puisqu'il est facile d'adapter, en fonction des dimensions des bandages pneumatique à produire, la circonférence du support de conformation et la longueur correspondante des nappes, en ajustant notamment le nombre des bandelettes posées, lesdits procédés peuvent toutefois présenter certains inconvénients.

En effet, une fois la nappe constituée sur le support de confection, il est nécessaire de procéder à son transfert vers le support de conformation, et donc d'interrompre la pose des bandelettes le temps nécessaire à l'évacuation de la nappe et à la libération dudit support de confection, ce qui génère une baisse du rendement de l'outil de pose.

En outre, dans la mesure où il est nécessaire de prévoir une pluralité de stations de travail distinctes pour respectivement confectionner les nappes par la pose de bandelettes, puis acheminer les nappes vers le support de conformation au moyen de convoyeurs adaptés, puis enfin transférer et conformer les nappes sur ledit support de conformation, les installations connues de fabrication des bandages peuvent être relativement encombrantes.

Enfin, il est parfois difficile de réaliser avec précision et de manière parfaitement reproductible les soudures des fronts de nappe pour fermer chaque nappe sur elle-même sur le support de conformation. Or, il est bien entendu nécessaire de garantir la qualité de telles soudures pour s'assurer de la robustesse du bandage et de la conformité de celui-ci aux engagements de performances et aux normes de sécurité. Par conséquent, l'opération de soudure requiert fréquemment une intervention d'un opérateur, pour réaliser ou rectifier manuellement la soudure dans les règles de l'art, et/ou pour contrôler ladite soudure. Cette phase du processus de fabrication est donc difficilement automatisable.

Le document US 2016/229139 A1 divulgue un procédé de fabrication d'un stratifié de forme annulaire sur un tambour destiné à entrer dans la constitution d'un bandage pneumatique.

Les objets assignés à l'invention visent par conséquent à remédier aux inconvénients susmentionnés et proposer un procédé de fabrication d'un stratifié de forme annulaire destiné à entrer dans la constitution d'un bandage, notamment d'un bandage pneumatique, qui procure une précision et une efficacité accrues, et qui puisse être mis en oeuvre de manière automatisée et au moyen d'une installation relativement compacte.

Les objets assignés à l'invention sont atteints au moyen d'un procédé de fabrication d'un stratifié de forme annulaire destiné à entrer dans la constitution d'un bandage, notamment d'un bandage pneumatique, procédé au cours duquel :

- on réalise sur un premier support, présentant une première surface de réception, une première nappe qui s'étend, selon une direction longitudinale, depuis un premier front avant jusqu'à un premier front arrière,
- puis on réalise sur le même premier support, par-dessus la première nappe, une seconde nappe qui s'étend, selon la direction longitudinale, depuis un second front avant jusqu'à un second front arrière, si bien que l'on obtient, sur le premier support, un stratifié qui s'étend en épaisseur depuis une première face, appliquée contre la première surface de réception, jusqu'à une seconde face opposée, et qui comprend, dans ladite épaisseur, au moins une première couche, formée par la première nappe, et une seconde couche, formée par la seconde nappe, de sorte que la première nappe est prise en sandwich entre la seconde nappe et la première surface de réception,
- puis on transfère ledit stratifié sur un second support, dit « noyau », qui présente une seconde surface de réception ayant une forme de révolution centrée sur un axe central, ledit transfert étant réalisé en appliquant la seconde face du stratifié contre la seconde surface de réception du noyau et en enroulant ledit stratifié sur la circonférence de ladite seconde surface de réception jusqu'à ce que le second front avant opère une jonction avec le second front arrière, fermant ainsi la seconde nappe sur elle-même, et que le premier front avant opère une jonction avec le premier front arrière, fermant ainsi la première nappe sur-elle-même, de sorte à refermer ledit stratifié sur lui-même en un anneau autour de l'axe central du noyau.

Avantageusement, la mise en oeuvre d'un transfert multi-nappes, ici bi-nappes, au cours duquel on procède au transfert simultanée de plusieurs nappes, ici au transfert simultané de la première nappe et de la seconde nappe, après avoir préconstitué le stratifié en superposant lesdites nappes sur un premier support, de manière à ce que la seconde nappe chevauche et recouvre au moins en partie la première nappe, permet d'économiser une opération de transfert, par rapport à un procédé qui recourrait à un transfert individuel séquentiel de la première nappe puis de la seconde nappe. Le procédé selon l'invention permet donc de gagner en efficacité.

En outre, un tel procédé permet une excellente maîtrise du positionnement relatif des première et seconde nappes, dans la mesure où la première et la seconde nappe sont réalisées l'une sur l'autre, sur un même premier support, dans un même référentiel machine, par rapport à une même origine commune, avant d'être transférées ensemble dans une configuration de stratifié au sein de laquelle la position de chaque nappe est "figée" par rapport à la position de l'autre nappe.

On peut ainsi en particulier maîtriser précisément le positionnement relatif des fronts de la première nappe par rapport aux fronts de la seconde nappe, et ainsi garantir d'une part un positionnement convenable, en azimut autour de l'axe central du bandage, de la soudure de la seconde nappe par rapport à la soudure de la première nappe, notamment afin d'éviter de superposer ces soudures dans une même zone angulaire, et d'autre part la réalisation pour chaque nappe d'une soudure individuelle de bonne qualité, de sorte que chaque nappe soit parfaitement refermée sur elle-même, et ce malgré un transfert groupé des deux nappes. Cette maîtrise des soudures confère une excellente robustesse et un bon équilibre au stratifié annulaire finalement obtenu.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, selon une vue en perspective, une partie d'une installation permettant de mettre en oeuvre un procédé selon l'invention, ladite installation utilisant un bras robotisé, et se trouvant ici en configuration pour réaliser une première nappe en posant des bandelettes sur un premier support formé par une virole.

Les figures 2A et 2B illustrent, selon des vues de détail en perspective, le résultat de la réalisation de la première nappe, puis, respectivement, le résultat de la réalisation de la seconde nappe par-dessus la première nappe, sur la virole de l'installation de la figure 1.

La figure 3 illustre, selon une vue d'ensemble en perspective, l'installation de la figure 1 dans une configuration où le bras robotisé vient saisir la virole pour la déplacer vers le noyau.

La figure 4 illustre, selon une vue d'ensemble en perspective, l'installation de la figure 3 au cours du déplacement de la virole vers le noyau, lors d'une phase de retournement de la virole.

La figure 5 illustre, selon une vue d'ensemble en perspective, l'installation de la figure 3 en configuration de transfert, la virole étant pressée par le bras robotisé contre le noyau.

La figure 6 illustre, selon une vue de face, l'installation des figures 1 et 3 pendant le transfert du stratifié depuis la virole jusque sur le noyau.

Les figures 7A et 7B illustrent, selon des vues schématiques de côté, le principe de retournement du stratifié lors du transfert depuis la virole jusque sur le noyau, respectivement au début du processus, lorsque le stratifié commence à s'enrouler sur le noyau, et à la fin du processus, lorsque le stratifié se referme sur lui-même en achevant ainsi d'envelopper le noyau sur un tour complet.

Les figures 8A, 8B, 8C, 8D et 8E illustrent, selon des vues schématiques de face, un transfert du stratifié depuis la virole jusque sur le noyau, au cours duquel on bascule progressivement la virole en roulis par rapport au noyau afin de presser efficacement les pointes des nappes contre les épaules galbées du noyau.

La figure 9 illustre, selon une vue développée schématique de dessus, le positionnement de la première nappe et de la seconde nappe décalées longitudinalement l'une par rapport à l'autre sur le premier support, pour permettre le raccordement de leurs fronts respectifs au terme de l'enroulement du stratifié sur le noyau.

La présente invention concerne un procédé de fabrication d'un stratifié 1 de forme annulaire destiné à entrer dans la constitution d'un bandage, notamment d'un bandage pneumatique.

De préférence, ledit stratifié 1 formera une ceinture de renfort, destinée à prendre place au niveau d'un bloc sommet du bandage, sous la bande de roulement. A cet effet, ledit stratifié 1 comprendra de préférence des fils de renforts 8, par exemple en métal, noyés dans un matériau à base de caoutchouc, tel que cela sera détaillé ci-après.

L'invention porte bien entendu également sur une installation 2 permettant la mise en oeuvre, de préférence automatique, d'un tel procédé.

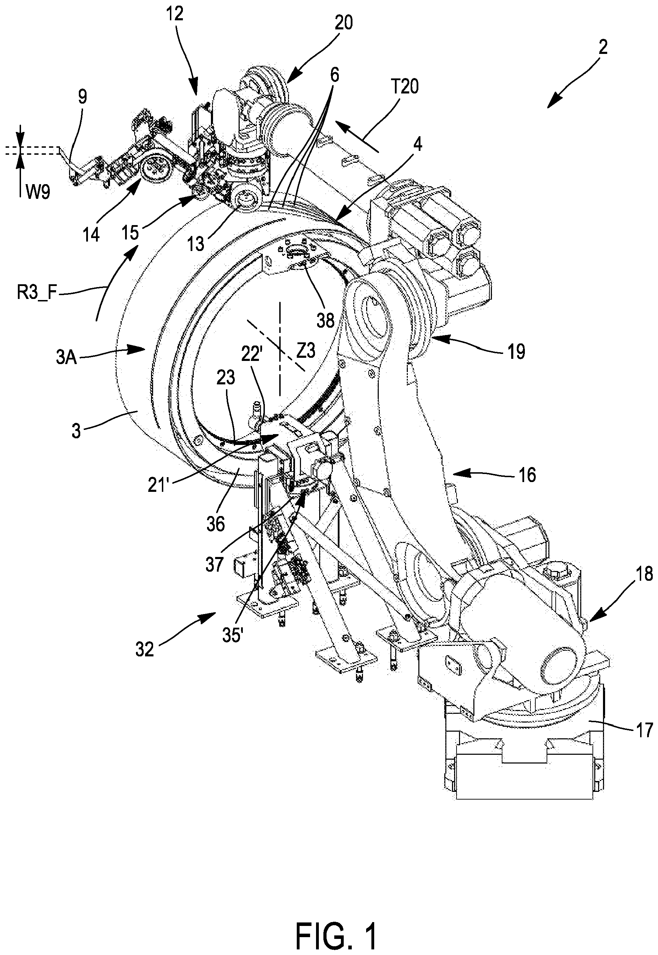

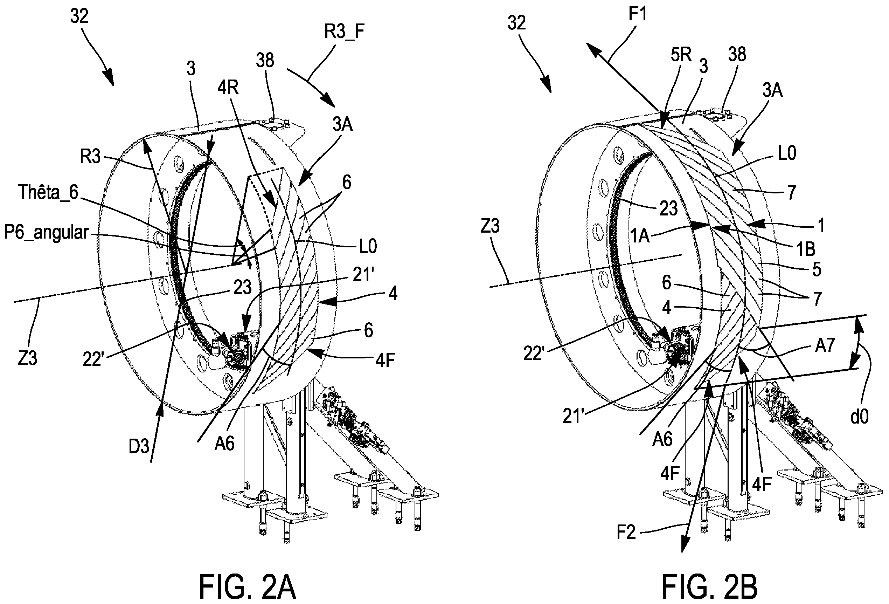

Au cours du procédé, et tel que cela est notamment visible sur les figures 1 et 2A, on réalise tout d'abord, sur un premier support 3, qui présente une première surface de réception 3A, une première nappe 4 qui s'étend, selon une direction longitudinale L0, depuis un premier front avant 4F jusqu'à un premier front arrière 4R.

Ledit premier support 3 forme de préférence une virole 3 cylindrique, qui présente un axe central de virole Z3, et qui possède de préférence une base circulaire. Ladite virole 3 pourra être formée dans un matériau rigide approprié, notamment métallique, par exemple un acier ou un alliage d'aluminium ou de magnésium. Par commodité de description, on pourra assimiler le premier support de réception à une virole 3 dans ce qui suit.

On réalise ensuite, sur le même premier support 3, par-dessus la première nappe 4 (dans le sens de l'épaisseur), une seconde nappe 5 qui s'étend, selon la direction longitudinale L0, depuis un second front avant 5F jusqu'à un second front arrière 5R.

Ainsi, on obtient, sur le premier support 3, et tel que cela est visible sur les figures 2B, 9 et 7A, un stratifié 1 qui s'étend en épaisseur H1 depuis une première face 1A, appliquée contre la première surface de réception 3A, jusqu'à une seconde face 1B opposée, et qui comprend, dans ladite épaisseur H1, au moins une première couche, formée par la première nappe 4, et une seconde couche, formée par la seconde nappe 5, de sorte que la première nappe 4 est prise en sandwich entre la seconde nappe 5 et la première surface de réception 3A.

La première nappe 4 et la seconde nappe 5, bien que réalisées successivement et donc séparément l'une de l'autre, l'une après l'autre, se chevauchent ainsi mutuellement sur une portion de longueur commune, de préférence sur une portion de longueur commune qui représente, le long de la direction longitudinale, plus de 50%, voire plus de 75%, de la longueur individuelle L4 de la première nappe 4 et/ou de la longueur individuelle L5 de la seconde nappe 5.

L'invention permet donc avantageusement de pré-constituer le stratifié 1 sur le premier support 3, dans une configuration initiale où ledit stratifié 1 est ouvert à ses extrémités longitudinales, qui correspondent aux fronts 4F, 4R, 5F, 5R des première et seconde nappes 4, 5.

Plus particulièrement, dans cette configuration initiale, et tant que la première nappe 4 est sur le premier support 3, ladite première nappe 4 se trouve en configuration ouverte, voire développée à plat, en fonction de la forme du premier support 3, c'est-à-dire que ladite première nappe 4 n'est pas refermée en anneau sur elle-même, et que, plus particulièrement, le premier front avant 4F ne touche pas, ni ne chevauche, le premier front arrière 4R, ni ne chevauche ou ne croise le second front arrière 5R de la seconde nappe 5.

De même, dans ladite configuration initiale, et tant que la seconde nappe 5 se trouve sur le premier support 3, ladite seconde nappe 5 se trouve en configuration ouverte, de sorte qu'elle n'est pas refermée en anneau sur elle-même et que, en particulier, son second front avant 5F ne touche pas ni ne chevauche son second front arrière 5R.

La première nappe 4 et/ou la seconde nappe 5 est de préférence formée à partir d'un matériau à base de caoutchouc, et plus particulièrement d'un matériau à base de caoutchouc cru, c'est-à-dire non vulcanisé.

De façon préférentielle, la première nappe 4, ainsi que, de préférence, la seconde nappe 5, contiennent des fils de renfort 8, de préférence métalliques, noyés dans le matériau à base de caoutchouc. Au sein de chaque nappe 4, 5, lesdits fils de renfort 8 sont de préférence agencés parallèlement les uns aux autres, en oblique par rapport à la direction longitudinale L0, de sorte à former un angle non nul, dit « angle de nappe » A6, respectivement A7, par rapport à ladite direction longitudinale L0.

On pourrait, dans l'absolu, envisager différentes manières de réaliser successivement la première nappe 4 puis la seconde nappe 5.

En particulier, on pourrait envisager de réaliser la première nappe 4 d'un seul tenant, en découpant et en prélevant dans une bande de base ou une nappe de base une laize aux dimensions, à la forme et à l'orientation souhaitées de ladite première nappe 4. De même, on pourrait réaliser la seconde nappe 5, ou chacune des première et seconde nappe 4, 5, d'un seul tenant par découpe d'une bande ou d'une nappe de base de dimensions suffisantes.

Toutefois, de préférence, tel que cela est bien visible sur les figures 1, 2A et 9, la première nappe 4 est réalisée en posant sur la première surface de réception 3A une première succession de bandelettes 6 que l'on aboute les unes aux autres.

De même, la seconde nappe 5 est de préférence réalisée en posant sur la première nappe 4 une seconde succession de bandelettes 7 que l'on aboute les unes aux autres.

Une telle solution est en effet très polyvalente, puisqu'elle permet de réaliser à la demande, quasiment sans pertes de matière, des nappes 4, 5 de largeur W4, W5 et de longueur L4, L5 librement choisies.

De façon connues en soi, les bandelettes 6, respectivement 7, sont juxtaposées bord à bord, en étant aboutées par leurs lisières latérales.

Les bandelettes 6, 7 sont de préférence réalisées à partir d'une composition à base de caoutchouc, et plus particulièrement d'une composition à base de caoutchouc cru, c'est-à-dire non vulcanisé.

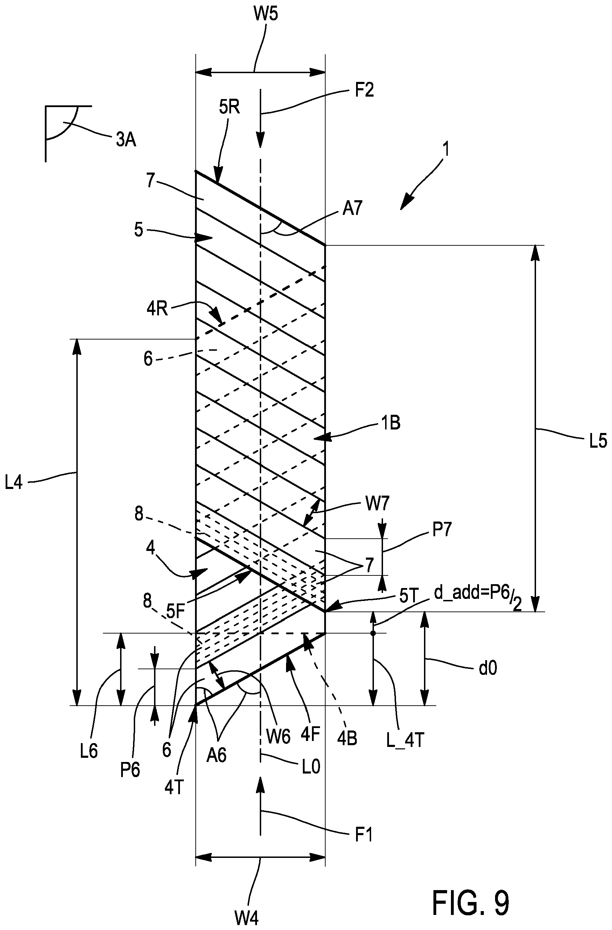

De préférence, les bandelettes 6, 7 contiennent des fils de renfort 8, qui sont disposés parallèlement les uns aux autres dans le sens de la longueur des bandelettes 6, 7, ici parallèlement aux lisières latérales, et qui sont de préférence continus sur toute la longueur de chaque bandelette considérée, tel que cela est schématisé en pointillés sur la figure 9.

Lesdits fils de renfort 8 sont de préférence noyés dans la composition à base de caoutchouc.

Lesdits fils de renfort améliorent avantageusement la résistance de la bandelette 6, 7 à la traction.

Les fils de renfort 8 peuvent être de préférence métalliques, ou le cas échéant être réalisés dans tout autre matériau adapté, notamment textile, présentant un module d'Young supérieur à un seuil choisi, afin de conférer à la bandelette 6, 7 une forte raideur en traction longitudinale (dans la direction desdits fils de renfort), supérieure à la raideur de la composition de caoutchouc vulcanisée considérée seule, voire une quasi-inextensibilité en traction longitudinale.

De telles bandelettes 6, 7 renforcées peuvent avantageusement être utilisées pour réaliser une ou des nappes 4, 5 de renfort, ou « nappes sommet », lesquelles pourront par exemple avantageusement être combinées, par superposition, avec une nappe carcasse à structure radiale, pour conférer au sommet du bandage la résistance mécanique souhaitée.

Quelle que soit la destination de la première ou de la seconde nappe 4, 5, et la valeur des angles de nappe A6, A7 correspondants, les bandelettes 6, 7 pourront par exemple être produites en découpant, selon des tronçons de longueur prédéterminée correspondant à la longueur souhaitée des bandelettes 6, 7, une bande continue 9, dite aussi « bande droit fil ».

Ladite bande continue 9 pourra par exemple être obtenue, de façon connue en soi, par calandrage, en déroulant fils de renfort 8 parallèlement les uns aux autres et en les emprisonnant entre deux fines couches de gomme pressées l'une contre l'autre par deux cylindres de calandre contrarotatifs.

De préférence, les bandelettes 6 constitutives de la première nappe 4 et les bandelettes 7 constitutives de la seconde nappe 5 seront issues d'une même bande continue 9, et présenteront donc une même épaisseur.

Plus globalement, la première nappe 4 et la seconde nappe 5 seront de préférence toutes deux de même épaisseur, égale à l'épaisseur des bandelettes 6, 7 qui les constituent.

De même, la largeur W6 des bandelettes 6 constitutives de la première nappe 4, considérée perpendiculairement à la direction longitudinale des bandelettes 6 et des fils de renfort 8, sera de préférence identique à la largeur W7 des bandelettes 7 constitutives de la seconde nappe 5, et égale à la largeur W9 de la bande continue 9.

En outre, de préférence, tel que cela est bien visible sur les figures 2B et 9, les bandelettes 6 constitutives de la première nappe 4 sont posées selon un premier angle A6 dit « premier angle de nappe » A6 non nul par rapport à la direction longitudinale L0, tandis que les bandelettes 7 constitutives de la seconde nappe 5 sont posées selon un second angle A7, dit « second angle de nappe » A7, qui est différent du premier angle de nappe A6, de sorte que les bandelettes 7 constitutives de la seconde nappe 5 forment une structure croisée avec les bandelettes 6 constitutives de la première nappe 4.

En pratique, les premier et second angles de nappe A6, A7 correspondent à l'orientation des fils de renfort 8 au sein respectivement de la première nappe 4 et de la seconde nappe 5, par rapport à la direction longitudinale L0 commune à la première nappe 4 et à la seconde nappe 5, et en projection dans un plan tangent à la première surface de réception 3A au point considéré.

La structure croisée des nappes 4, 5 au sein du stratifié 1, peut notamment permettre de créer, en combinaison avec d'autres fils de renfort appartenant à une nappe carcasse, des structures triangulaires de renfort au sein du sommet du bandage.

Le second angle de nappe A7 est de préférence de signe opposé au premier angle de nappe A6, par rapport à la direction longitudinale L0.

A titre indicatif, lesdits angles de nappes A6, A7 pourront être de préférence compris, en valeur absolue, entre 5 degrés et 90 degrés, plus préférentiellement entre 10 degrés et 60 degrés, notamment entre 20 degrés et 50 degrés, voire entre 25 degrés et 45 degrés. Les angles de nappe A6, A7 pourront par exemple valoir 25 degrés (à +/- 1 degré), 33 degrés (à +/- 1 degré) ou 45 degrés (à +/- 1 degré).

La valeur de l'angle de nappe A6, A7 pourra être choisie notamment en fonction de la largeur W4, W5 de la nappe considérée.

Selon de possibles modes de réalisation, on pourra notamment choisir un angle de nappe A6, A7 valant 25 degrés (à +/- 1 degré) pour une largeur de nappe W4, W5 comprise entre 200 mm et 260 mm, par exemple pour une nappe 4, 5 présentant une largeur W4, W5 de 205 mm ou 255 mm, ou bien encore un angle de nappe A6, A7 valant 33 degrés (à +/- 1 degré) pour une largeur de nappe W4, W5 comprise entre 200 mm et 400 mm, par exemple pour une nappe présentant une largeur W4, W5 de 205 mm, 255 mm, 265 mm ou 370 mm, ou bien encore un angle de nappe A6, A7 valant 45 degrés (à +/- 1 degré) pour une largeur de nappe W4, W5 comprise entre 260 mm et 400 mm, par exemple présentant une largeur de 265 mm ou 370 mm.

Encore plus préférentiellement, le second angle de nappe A7 peut être de même valeur absolue que le premier angle de nappe A6 et de signe opposé.

De préférence, les première et seconde nappes 4, 5, et plus particulièrement les bandelettes 6, 7, seront posées sur le premier support 3 au moyen d'un outil de pose 12, ou « tête de pose » 12.

Ledit outil de pose 12 pourra comprendre, tel que cela est illustré sur la figure 1, un galet presseur 13 permettant de presser les bandelettes 6, 7 contre la première surface de réception 3A.

L'outil de pose 12 pourra en outre comprendre un dispositif d'acheminement 14 permettant d'acheminer la bande continue 9 vers le galet presseur 13, ainsi qu'un dispositif de coupe 15 permettant de sectionner transversalement la bande continue 9 pour en détacher les bandelettes 6, 7.

Le dispositif de coupe 15 pourra de préférence comprendre deux cylindres contrarotatifs, dont les axes de rotation, parallèles, seront disposés perpendiculairement au sens de défilement longitudinal de la bande continue 9, et qui seront pourvus chacun à leur surface d'une lame hélicoïdale centrée sur leur axe de rotation, de sorte que la rotation desdits cylindres en sens contraire l'un de l'autre aura pour effet de faire coopérer lesdites lames hélicoïdales conjuguées et de provoquer ainsi, par cisaillement, la coupe transversale de la bande continue 9, depuis un bord latéral de ladite bande continue 9 jusqu'à l'autre bord latéral.

En adaptant le rapport de synchronisation entre la vitesse de rotation des lames hélicoïdales et la vitesse longitudinale de défilement de la bande continue 9, on pourra régler l'angle de biseau selon lequel on choisit de couper ladite bande continue 9 pour la fractionner en bandelettes 6, 7 successives. La valeur de cet angle de biseau sera en pratique choisie égale à la valeur de l'angle de nappe A6, A7 souhaité.

L'outil de pose 12 sera de préférence porté par un bras robotisé 16, permettant de déplacer ledit outil de pose 12 relativement au premier support 3.

Plus particulièrement, ledit bras robotisé 16 permettra de déplacer l'outil de pose 12 en translation rectiligne selon une direction parallèle à l'axe central de virole Z3, tandis que la virole 3 sera animée d'un mouvement de rotation R3_F autour dudit axe central Z3. La combinaison de ces deux mouvements simples et stables permettra en effet de coucher les bandelettes 6, 7 sur la surface de réception 3A de la virole 3 en conférant auxdites bandelettes 6, 7 leur angle de nappe A6, A7 souhaité. L'angle de lacet du galet presseur 13 sera bien entendu adapté à l'angle de nappe A6, A7 visé.

De préférence, le bras robotisé 16 sera un bras de type anthropomorphe, à six axes, comprenant successivement une embase 17 pourvue d'une articulation d'épaule 18, puis une articulation de coude 19 et enfin une articulation de poignet 20 à laquelle sera fixé l'outil de pose 12.

On notera que pour limiter l'influence de la gravité et ainsi gagner en précision et en stabilité lors de la constitution des nappes 4, 5, la pose des bandelettes 6, 7 sur la virole 3 se fera dans une configuration selon laquelle, tel que cela est visible sur la figure 1, la virole 3 est placée verticalement, de sorte à tourner autour d'un axe central de virole Z3 horizontal, tandis que le bras robotisé 16 porte l'outil de pose 12 en suspension, avec le poignet 20 cassé vers le bas, et amène ledit outil de pose 12 par le dessus de la virole 3, en appui contre le point le plus élevé de la surface de réception 3A. La virole 3 offre ainsi avantageusement un soutien vertical à l'outil de pose 12 pendant que le bras 16 anime la tête de pose 12 de mouvements de translation parallèles à l'axe central de virole Z3.

La virole 3 sera animée d'une succession de mouvements de rotation alternés permettant la pose d'une bandelette 6, puis le retour au point de départ de la bandelette 6 suivante, décalé et incrémenté angulairement par rapport au point de départ de la bandelette précédente d'une valeur de pas P6 prédéterminée, puis la pose ladite bandelette suivante, etc.

Une fois la première nappe 4 constituée, c'est-à-dire une fois toutes les bandelettes 6 correspondantes posées et aboutées les unes aux autres sur la virole 3, la virole 3 rebroussera chemin pour venir se placer au point de départ de la seconde nappe 5. Après avoir adapté l'angle de lacet du galet presseur 13 au second angle de nappe A7, on pourra alors débuter la pose des bandelettes 7 qui se superposent à la première nappe 4, et que l'on aboutera les unes aux autres selon un second pas de pose P7 prédéterminé, comme cela est visible sur la figure 9.

Selon le procédé, après avoir réalisé sur le premier support 3 le stratifié 1 contenant la première nappe 4 et la seconde nappe 5, on transfère ledit stratifié 1 sur un second support 10, dit « noyau » 10, qui présente une seconde surface de réception 10A ayant une forme de révolution centrée sur un axe central Z10.

On transfère ainsi ensemble la première nappe 4 et la seconde nappe 5, du premier support 3 au second support 10.

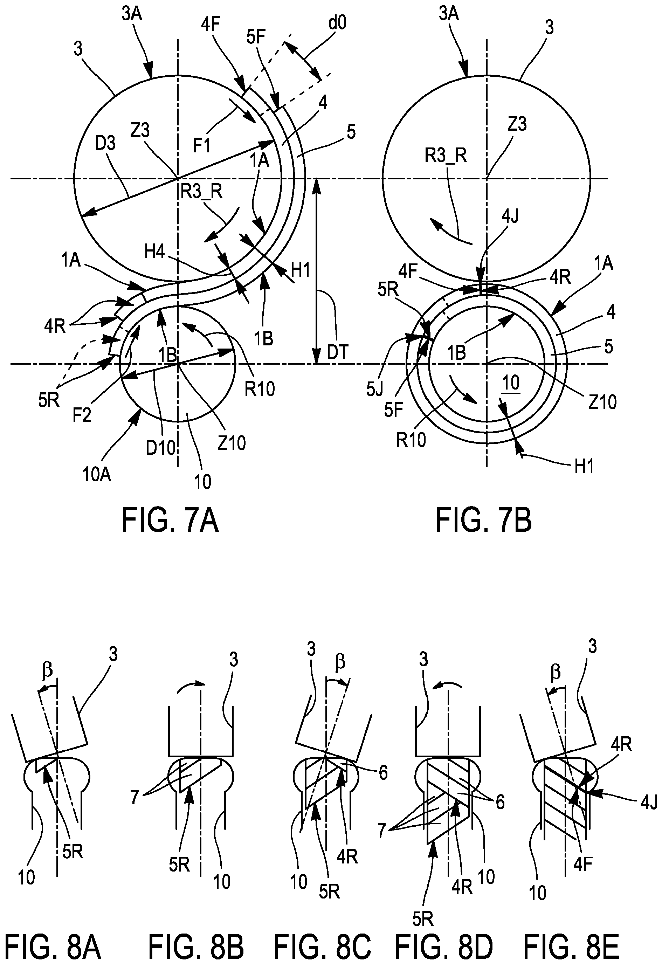

Ledit transfert est réalisé en appliquant la seconde face 1B du stratifié contre la seconde surface de réception 10A du noyau 10 et en enroulant ledit stratifié 1 sur la circonférence de ladite seconde surface de réception 10A jusqu'à ce que le second front avant 5F opère une jonction 5J avec le second front arrière 5R, fermant ainsi sur elle-même la seconde nappe 5, qui était jusqu'ici restée ouverte, et que le premier front avant 4F opère une jonction 4J avec le premier front arrière 4R, fermant ainsi sur-elle-même la première nappe 4, qui était jusqu'ici restée ouverte, de sorte à, plus globalement, refermer ledit stratifié 1 sur lui-même en un anneau autour de l'axe central Z10 du noyau, tel que cela est notamment visible sur les figures 7B et 8E.

Ainsi, on peut avantageusement obtenir, en une seule opération de transfert, particulièrement simple et rapide à exécuter, la fermeture du stratifié 1 sur lui-même, et plus particulièrement la fermeture des nappes 4, 5 constitutives des différentes couches dudit stratifié, en une ceinture annulaire, qui forme une boucle fermée simple, monotour, autour de l'axe central Z10 du noyau, sur la seconde surface de réception 10A annulaire.

Le transfert et l'aboutage simultané des deux couches de nappes 4, 5 constitutives du stratifié 1 permet avantageusement de réduire le temps de cycle de fabrication du stratifié, et plus globalement le temps de cycle de fabrication du bandage, en économisant une opération de transfert par rapport à un procédé connu qui présenterait un fonctionnement séquentiel selon lequel on transférerait individuellement chaque nappe juste après avoir confectionné ladite nappe.

En outre, un tel procédé permet de maîtriser précisément le positionnement relatif, et plus particulièrement le positionnement longitudinal, selon la direction longitudinale L0, de la première nappe 4 et de la seconde nappe 5 au sein du stratifié 1, du fait que l'on réalise les deux nappes sur le même premier support 3, en bénéficiant donc, pour confectionner successivement les deux nappes 4, 5, du même référentiel machine, du même étalonnage, et en particulier de la même prise d'origine machine, attachés audit premier support 3.

Avantageusement, la maîtrise du positionnement des première et seconde nappes 4, 5 permet également de maîtriser la position relative, ainsi que la qualité, des soudures 4J, 5J, c'est-à-dire des jonctions 4J, 5J sur eux-mêmes, une fois le tour d'enroulement effectué autour de l'axe central Z10 du noyau, des fronts avant et arrière 4F, 4R de la première nappe 4, respectivement des fronts avant et arrière 5F, 5R de la seconde nappe 5.

Plus particulièrement, le chevauchement longitudinal de la première nappe 4 et de la seconde nappe 5 n'étant que partiel, comme cela sera détaillé plus bas, les fronts respectifs 5F, 5R de la seconde nappe 5 sont décalés longitudinalement par rapport à aux fronts 4F, 4R homologues de la première nappe 4, si bien que les soudure 4J, 5J se retrouvent décalées angulairement l'une par rapport à l'autre en azimut autour de l'axe central du noyau Z10, ce qui évite de créer une zone de fragilisation dans le stratifié 1 annulaire.

Les longueurs respectives L4, L5 de la première nappe 4 et de la seconde nappe 5 sont bien entendu ajustées, lorsque lesdites nappes sont confectionnées sur le premier support 3, de manière à correspondre à la longueur développée de la circonférence du noyau 10 sur laquelle lesdites nappes viennent s'enrouler, de sorte que chacune des première et seconde nappes 4, 5 couvre exactement, depuis son front avant 4F, 5F jusqu'à son front arrière 4R, 5R, un, et un seul, tour complet en azimut autour de l'axe central Z10 dudit noyau 10.

On notera que le noyau 10 présente des dimensions, et notamment un diamètre hors-tout D10 par rapport à l'axe central Z10, qui correspondent aux dimensions définitives que l'on souhaite conférer au bandage.

Ainsi, le noyau 10 pourra de préférence servir de noyau de cuisson, que l'on introduira tel quel dans une presse de cuisson pour vulcaniser le stratifié 1 sous sa forme annulaire.

Plus préférentiellement, après avoir enroulé le stratifié 1 sur le noyau 10, on pourra déposer sur le même noyau 10, par enroulement, des couches supplémentaires, notamment des couches de matériau à base de caoutchouc destinées à former une bande de roulement, puis envoyer l'ensemble en cuisson, afin de vulcaniser le bandage dans son ensemble sur ledit noyau 10.

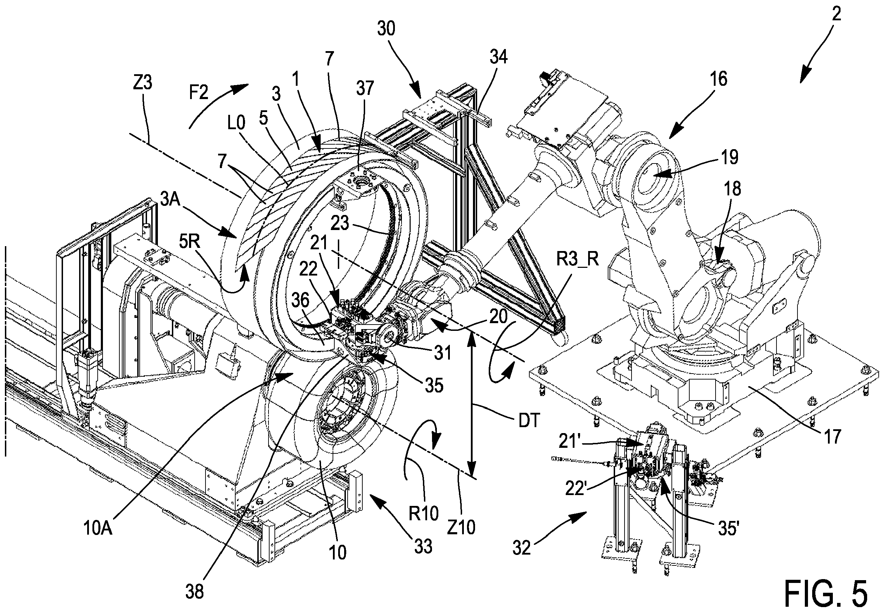

De préférence, tel que cela est visible sur les figures 5, 6 et 7A, le transfert s'effectue par contact, en rapprochant du noyau 10 le premier support 3, porteur du stratifié 1, de manière à faire adhérer la seconde face 1B du stratifié 1 à la seconde surface de réception 10A dudit noyau 10, puis en animant le premier support 3 et le second support 10 d'un mouvement relatif R3_R, R10, dit « mouvement de transfert » R3_R, R10, qui permet de dérouler et décoller le stratifié 1, et plus particulièrement la première face 1A dudit stratifié 1, de la première surface de réception 3A du premier support 3, tout en enroulant simultanément le stratifié, par sa face opposée 1B, sur la seconde surface de réception 10A du noyau 10.

On notera que, ce faisant, le transfert s'accompagne d'une permutation du stratifié 1, en ceci que la face 1B du stratifié qui était initialement apparente sur le premier support 3 devient la face cachée qui vient au contact du second support 10, et inversement, la face 1A initialement cachée, qui reposait contre le premier support 3, devient la face apparente, radialement externe, sur le second support 10.

Suite à cette permutation, le stratifié 1 annulaire se trouvera orienté, sur le noyau 10 puis par conséquent au sein du bandage fini, de telle sorte que la seconde nappe 5 formera un cylindre plus proche de l'axe central Z10 que le cylindre formé par la première nappe 4, c'est-à-dire que la seconde nappe 5 sera orientée radialement vers l'intérieur tandis que la première nappe 4 sera orientée radialement vers l'extérieur, selon une orientation inverse de celle que le stratifié 1 présentait lors de la confection sur le premier support 3.

Le mouvement de transfert résultera de préférence de la combinaison de deux mouvements simultanés conjugués, à savoir un mouvement R3_R du premier support 3, ici un mouvement de rotation R3_R de la virole 3, et un mouvement R10 du second support 10, les deux supports 3, 10 étant ainsi mis en mouvement actif par rapport au bâti de l'installation 2.

On notera que, de préférence, la longueur L4, L5 de chacune des nappes 4, 5 étant dimensionnée, lors de la confection de la nappe sur le premier support 3, de manière à correspondre exactement à la longueur nécessaire à l'enroulement sur le noyau 10, il ne sera avantageusement pas nécessaire d'exercer un étirement ou une compression longitudinale du stratifié 1 lors du transfert pour adapter la longueur dudit stratifié 1 à la longueur développée de la seconde surface de réception 10A.

Par conséquent, avantageusement, le mouvement de transfert R3_R, R10 pourra correspondre à un mouvement relatif de roulement sans glissement, la longueur développée de la première surface de réception 3A qui défile par unité de temps selon ce mouvement de transfert étant égale à la longueur de la seconde surface de réception 10A qui défile pendant cette même unité de temps. En d'autres termes, on peut donc synchroniser le mouvement du second support 10 avec celui du premier support 3, sans qu'il soit nécessaire de freiner le premier support 3 par rapport au second support 10 pour étirer le stratifié, ou au contraire de l'accélérer pour comprimer le stratifié 1.

Dans l'absolu, on pourrait envisager d'utiliser un premier support 3 de type table ou convoyeur à bande, qui offrirait ainsi une première surface de réception 3A sensiblement plane.

Auquel cas, le transfert pourrait être effectué en rapprochant la première surface de réception plane 3A de façon tangente à la circonférence du noyau 10 et donc de façon tangente à la seconde surface de réception 10A cylindrique.

Toutefois, le premier support 3 présente de préférence une forme de révolution et est de préférence, comme indiqué plus haut, formé par une virole 3 cylindrique de base circulaire, centrée sur un axe dit « axe central de virole » Z3, dont la surface radialement externe forme la première surface de réception 3A.

Sur le premier support 3A, la première nappe 4A occupe ainsi une position radialement interne, par rapport à la seconde nappe 5 qui occupe une position radialement externe.

Avantageusement, le transfert peut alors être réalisé en appliquant ladite virole 3 portant le stratifié 1 contre le noyau 10, de sorte à prendre en sandwich le stratifié 1 entre la première surface de réception 3A de la virole 3 et la seconde surface de réception 10A du noyau 10, puis en mettant la virole 3 et le noyau 10 en mouvement relatif de contra-rotation R3_R, R10.

Ainsi, la virole 3 effectue, pendant le transfert, un mouvement rotatif R3_R dans un sens, tandis que le noyau 10 effectue un mouvement rotatif R10 dans un sens opposé, de sorte que la virole 3 et le noyau 10 exécutent l'un par rapport à l'autre un mouvement de roulement.

La virole 3 vient au contact tangent du noyau 10, de sorte que, lorsque le stratifié 1 passe de la première surface de réception 3A à la seconde surface de réception 10A, il s'opère une inversion de la courbure dudit stratifié.

Avantageusement, le stratifié 1 est ainsi détaché progressivement et en douceur de la virole 3 par pelage, pour aborder le noyau 10 de façon tangentielle.

Un tel transfert par déroulement/enroulement avec inversion de courbure du stratifié 1 s'opère avantageusement sans heurts mais également sans relâchement du stratifié 1, vis-à-vis des surfaces de réception 3A, 10A auxquelles ledit stratifié adhère.

Un tel transfert par appui de type cylindre sur cylindre, plutôt que cylindre sur plan, permet en outre de mieux maîtriser les pressions de contact.

Globalement, l'invention permet donc d'améliorer la qualité et la reproductibilité du transfert.

La virole 3 est de préférence aimantée, de sorte à pouvoir assurer le maintien des bandelettes 6, 7, et plus globalement du stratifié 1, en attirant les fils de renforts 8 métalliques, pendant la pose des bandelettes 6, 7, lors de la réalisation des nappes 4, 5, puis lors du transport de la virole 3 jusqu'au noyau 10.

De préférence, l'adhésion du stratifié 1 sur la seconde surface de réception 10A du noyau 10 se fait par affinité, du fait du collant intrinsèque (« tack », en anglais) de la gomme constitutive de la seconde nappe 5 dudit stratifié 1.

De préférence, on choisira de dimensionner l'aimantation de la virole 3 de sorte que le champ magnétique soit suffisant pour assurer le maintien du stratifié 1 sur la virole 3 pendant la pose des bandelettes 6, 7 puis pendant le déplacement de la virole 3 jusqu'au noyau 10, mais néanmoins inférieur aux forces d'adhérence du stratifié 1 par collant sur le noyau 10, de sorte que le stratifié 1 puisse se détacher progressivement de la virole 3 au fur et à mesure que ledit stratifié 1 s'enroule sur le noyau 10, pendant le transfert.

Lors du transfert, l'axe central de virole Z3 et l'axe central de noyau Z10 sont de préférence contenus dans un même plan, ici un plan vertical sur les figures 5, 6 et 7A, voire, préférentiellement, ces axes centraux Z3, Z10 sont colinéaires (parallèles).

La distance entre le premier support 3 et le second support 10, et plus particulièrement l'entraxe DT entre l'axe central de virole Z3 et l'axe central de noyau Z10, sera de préférence défini de manière à pouvoir presser le stratifié 1, selon son épaisseur H1, entre le premier support 3 et le second support 10 avec un degré de compression adapté au transfert.

A titre indicatif, l'entraxe DT entre l'axe de virole Z3 et l'axe de noyau Z10 pendant le transfert sera de préférence égal à la somme des rayons des première et seconde surfaces de réception 3A, 10A et de l'épaisseur H1 du stratifié 1, c'est-à-dire préférentiellement ici de l'épaisseur cumulée des première et seconde nappes 4, 5, moins une valeur de correction qui est destinée à assurer la mise en compression du stratifié 1 contre la seconde surface de réception 10A, par une prise en sandwich élastique entre la première surface de réception 3A et la seconde surface de réception 10A. Ladite valeur de correction peut être comprise entre 0,5 et 1 mm, et par exemple égale à 0,8 mm.

La valeur de correction pourra en outre dépendre de la rigidité structurelle de la virole 3, et de la rigidité structurelle du noyau 10.

La vitesse de rotation R3_R de la virole 3 et celle R10 du noyau 10 sont synchronisées selon un rapport de synchronisation choisi.

Ce rapport de synchronisation pourra éventuellement varier pendant le transfert. Cette variation du rapport de synchronisation permettra avantageusement, au besoin, d'étirer plus ou moins le stratifié 1 lors du transfert, de sorte à ajuster si nécessaire la longueur développée dudit stratifié 1 au périmètre du noyau 10, et ainsi pouvoir refermer précisément le stratifié 1 sur lui-même enjoignant l'une à l'autre les extrémités (fronts avant et arrière) de chacune de ses nappes 4, 5 constitutives.

Toutefois, ainsi que cela sera détaillé plus bas, le procédé permet avantageusement de confectionner chacune des première et seconde nappe 4, 5 à la longueur L4, L5 exacte souhaitée, qui coïncide avec la développée correspondante du noyau 10, et qui est donc juste nécessaire et suffisante pour permettre une jonction bord à bord du front avant 4F, 5F de chaque nappe avec le front arrière 4R, 5R correspondant au terme d'un tour d'enroulement sur le noyau 10.

C'est pourquoi le rapport de synchronisation entre la vitesse de rotation R3_R de la virole 3 et la vitesse de rotation R10 du noyau 10 pourra de préférence être constant pendant le transfert.

On notera qu'il est d'autant plus intéressant de ne pas avoir à étirer le stratifié 1 pendant son enroulement sur le noyau 10 que ledit stratifié 1 présente, du fait qu'il regroupe plusieurs nappes 4, 5 superposées, une raideur relativement élevée, qui compliquerait la gestion d'une éventuelle extension.

Par ailleurs, pour permettre le transfert, il est nécessaire que le stratifié 1 reste ouvert sur la virole 3, de sorte que les extrémités longitudinales dudit stratifié ne se chevauchent pas sur la première surface de réception 3 de ladite virole et puissent ainsi être détachées de ladite virole 3 séparément et successivement pour rejoindre le noyau 10, sans interférer prématurément l'une avec l'autre.

C'est pourquoi la virole 3 présente une circonférence qui est strictement supérieure à la circonférence du noyau 10.

En d'autres termes, la première surface de réception 3A de la virole 3 présentera un périmètre strictement supérieur à la longueur totale du stratifié 1 à produire et à transférer, et donc un diamètre D3 strictement supérieur au diamètre D10 de la seconde surface de réception 10A du noyau de pose 10, dont le périmètre sera quant à lui égal à la longueur du stratifié 1.

La virole 3 sera dimensionnée de sorte que le stratifié 1 confectionné sur cette virole couvre, depuis une extrémité longitudinale avant de la première nappe 4 (ici typiquement une première pointe 4T du premier front avant 4F) jusqu'à une autre extrémité longitudinale arrière de la seconde nappe 5 (ici typiquement une pointe du second front arrière 5R), la plus éloignée (en suivant le stratifié 1) de l'extrémité longitudinale avant de la première nappe 4, un secteur angulaire hors-tout qui est strictement inférieur à 360 degrés, et, plus préférentiellement, qui sera compris entre 90 degrés et 320 degrés, et par exemple entre 120 degrés et 300 degrés, autour de l'axe central Z3 de ladite virole.

On prévoira ainsi, sur la surface de réception de la virole 3A qui est non couverte par le stratifié 1 et comprise entre le premier front avant 4F de la première nappe et le second front arrière 5R de la seconde nappe 5, une distance minimale de séparation entre les fronts 4F, 5R de nappe, qui permet de maintenir le stratifié ouvert autour de l'axe central de la virole Z3, en évitant que les extrémités libres dudit stratifié 1 ne se touchent.

A titre indicatif, et notamment pour des stratifiés 1 prévus pour la fabrication de bandages destinés à équiper des jantes de 14 pouces à 24 pouces, et plus particulièrement de 16 pouces à 20 pouces, cette distance minimale de séparation, qui correspond à la mesure de l'arc qui sépare, en une position axiale donnée le long de l'axe central de virole Z3, le premier front avant de nappe 4F du second front arrière de nappe 5R, et qui n'est donc pas couvert par le stratifié 1, sera égale ou supérieure à 40 mm.

Plus globalement, on pourra prévoir que la longueur d'arc considérée à la surface de réception de la virole 3A et qui correspond à la distance minimale de séparation entre les pointes d'extrémité du stratifié 1 couvre un secteur angulaire (libre de stratifié), considéré en azimut autour de l'axe central de virole Z3, d'au moins 5 degrés, d'au moins 10 degrés, d'au moins 40 degrés, voire d'au moins 60 degrés.

Par ailleurs, comme indiqué plus haut, la longueur de chevauchement commune aux première et seconde nappe 4, 5 est de préférence strictement inférieure à la longueur L4, L5 individuelle respective de chacune desdites nappes 4, 5, de sorte que lesdites première et seconde nappes 4, 5 ne se chevauchement que partiellement, dans le sens de leur longueur.

Plus préférentiellement, sur le premier support 3, quel que soit au demeurant l'agencement dudit premier support 3, et tel que cela est visible sur les figures 2B, 7A et 9, la seconde nappe 5 présente un décalage longitudinal d0 par rapport à la première nappe 4, de sorte que, si l'on parcourt le stratifié 1 le long de la direction longitudinale L0 selon un premier sens F1, dit « sens de confection » F1, le premier front avant 4F, par lequel débute la première nappe 4, précède le second front avant 5F par lequel débute la seconde nappe 5, de sorte que la première nappe 4 reste apparente et non recouverte par la seconde nappe 5 entre le premier front avant 4F et le second front avant 5F, tandis que le premier front arrière 4R par lequel se termine la première nappe 4 précède le second front arrière 5R par lequel se termine la seconde nappe 5, de sorte que la seconde nappe 5 recouvre le premier front arrière 4F de la première nappe 4, et déborde longitudinalement au-delà de la première nappe 4.

Avantageusement, ce décalage longitudinal d0 permet notamment de positionner les soudures 4J, 5J respectives de la première nappe 4 et de la seconde nappe 5 à des azimuts différents autour de l'axe central du noyau Z10, tel que cela est bien visible sur la figure 7B, de sorte que lesdites soudures 4J, 5J ne se superposent pas, et ne se croisent pas, ce qui évite de créer une zone de faiblesse ou une irrégularité au sein du bandage.

En outre, ce décalage longitudinal d0 permet d'éviter toute interférence entre la première nappe 4 et la seconde nappe 5 lorsque l'on enroule lesdites nappes 4, 5 sur le noyau 10, de manière à ce que la seconde nappe 5 ne masque pas la première nappe 4 au niveau où les fronts avant 4F et arrière 4R de ladite première nappe 4 doivent se raccorder l'un à l'autre pour former la soudure 4J de la première nappe 4, et, réciproquement, la première nappe 4 ne fait pas obstacle à la fermeture sur elle-même de la seconde nappe 5 en une soudure 5J de seconde nappe, lorsque les fronts avant 5A et arrière 5R de ladite seconde nappe 5 se raccordent l'un à l'autre.

De préférence, tel que cela est visible sur les figures 5, 6, 7A et 7B, l'on exécute le transfert sur le noyau 10 selon un mouvement d'enroulement R3_R, R10 dirigé de telle manière que le contact progressif entre le noyau 10 et le stratifié 1 s'opère, le long de la direction longitudinale L0, selon un second sens F2, opposé au premier sens F1, et dit « sens d'application lors du transfert » F2, de sorte que l'on débute le transfert par le second front arrière 5R de la seconde nappe 5, et que l'on achève ledit transfert par le premier front avant 4F de la première nappe 4 après avoir posé successivement sur le noyau 10, après le second front arrière 5R de la seconde nappe 5, le premier front arrière 4R de la première nappe 4 puis le second front avant 5F de la seconde nappe 5.

Ainsi, le stratifié est tout d'abord confectionné sur le premier support de réception 3A de manière à ce que le premier front avant 4F, le second front avant 5F, le premier front arrière 4R et le second front arrière 5R se présentent dans cet ordre, selon le sens de confection F1, la seconde nappe 5 se trouvant en retrait longitudinal d'une valeur de décalage d0 par rapport à la première nappe selon ce sens de confection F1, tandis que l'on présente ensuite le stratifié 1 en sens inverse pour réaliser le transfert, de sorte que l'on décolle du premier support 3 et l'on pose dans cet ordre sur le second support 10 le second front arrière 5R, puis le premier front arrière 4R puis le second front avant 5F, qui se connecte au second front arrière 5R déjà présent sur le noyau 10, et enfin le premier front avant 4F, qui se connecte au premier front arrière 4R déjà présent sur le noyau 10.

A cet effet, on notera que, lors de la réalisation de chaque nappe 4, 5, la virole 3 progresse, à chaque pose de bandelette 6, 7, selon un premier sens de rotation R3_F, dit « sens avant » R3_F, qui permet d'ordonner lesdites bandelettes 6, 7 selon le sens de confection F1, tandis que lors du transfert, la virole 3 est entraînée en rotation dans un second sens de rotation R3_R opposé, dit « sens arrière » R3_R, pour présenter le stratifié 1 en commençant par le second front arrière 5R.

Ainsi, tel que cela est bien visible sur les figures 7A et 7B, grâce à la combinaison d'un décalage longitudinal d0 entre la première nappe 4 et la seconde nappe 5 et d'une inversion du sens de défilement du stratifié 1 entre la confection et le transfert, le pan de queue du stratifié 1, c'est-à-dire le pan saillant de la seconde nappe 5 qui est compris entre le premier front arrière 4R de la première nappe 4 et le second front arrière 5R de la seconde nappe 5, et qui est donc initialement non chevauchant avec la première nappe 4, et qui forme en quelque sorte la surcouche du stratifié 1 sur le premier support 3, se pose ensuite en premier sur le noyau 10, pour devenir la sous-couche de ce même stratifié 1 sur le noyau 10, exposant ainsi une portion nue de la seconde nappe 5 qui vient ensuite être recouverte, au terme du tour d'enroulement sur le noyau 10, par le pan de tête du stratifié, formé par la portion saillante de la première nappe 4 comprise entre le second front avant 5F de la seconde nappe 5 et le premier front avant 4F de la première nappe 4, et donc initialement non chevauchante avec la seconde nappe 5.

Puisque le pan de tête et le pan de queue du stratifié 1 présentent des formes et des dimensions complémentaires, ils se superposent parfaitement, si bien que le stratifié 1 se referme avantageusement sur lui-même en assurant une continuité annulaire de la seconde nappe 5 d'une part, et de la première nappe 4 d'autre part, sans créer de bourrelet, de surépaisseur radiale ou de ressaut radial au niveau des jonctions 4J, 5J entre nappes 4, 5, et plus globalement au niveau des portions terminales desdites nappes 4, 5.

De préférence, tel que cela est notamment visible sur les figures 2A et 9, le premier angle de nappe A6 confère à la première nappe 4 une première pointe biseautée 4T (avant) qui est délimitée par le premier front avant 4F de ladite première nappe et qui s'étend, selon la direction longitudinale L0, sur une longueur L_4T dite « longueur de première pointe ».

De manière analogue, le second angle de nappe A7 confère de préférence à la seconde nappe 5 une seconde pointe biseautée 5T (avant) délimitée par le second front avant 5F.

Alors, la seconde pointe biseautée 5T est de préférence placée en retrait de la première pointe biseautée 4T, dans le sens de confection F1, d'une valeur de décalage longitudinal d0 qui est supérieure à la longueur de première pointe L_4T.

Ainsi, en plaçant le second front avant 5F de la seconde nappe, à tout le moins la portion dudit second front avant 5F qui se superpose à la première nappe 4, au-delà de la base 4B de la première pointe biseautée 4T dans le sens de confection F1, ladite base 4B correspondant au segment fictif perpendiculaire à la direction longitudinale L0 et qui marque la limite fictive entre ladite première pointe biseautée 4T de la première nappe et la portion contiguë de pleine largeur de cette même première nappe 4, on évite toute interférence entre les nappes 4, 5 lors du transfert par enroulement.

On évite ainsi également toute superposition, notamment tout croisement, entre les soudures 4J, 5J respectives de la première nappe 4 et de la seconde nappe 5, qui s'opèrent en oblique par rapport à la direction longitudinale L0, selon les angles de nappes A6, A7 susmentionnés.

Un tel agencement décalé évitera donc avantageusement de créer la moindre amorce de déchirure au sein du stratifié 1, une fois ce dernier enroulé en anneau autour de l'axe central Z 10 du noyau 10.

La ceinture de renfort ainsi obtenue sera par conséquent particulièrement robuste.

Bien entendu, l'agencement en pointes biseautées 4T, 5T décalées longitudinalement selon le sens de confection F1, tel que décrit ci-dessus en référence à la portion de tête du stratifié 1, se retrouvera à l'identique au niveau de la portion de queue, ou une pointe biseautée arrière de la seconde nappe 5, délimitée par le second front arrière 5R, suit, dans le sens de confection F1, une pointe biseautée arrière de la première nappe 4 délimitée par le premier front arrière 4R, à distance d'une valeur de décalage longitudinal d0 sensiblement voire exactement égale à celle prévue entre les pointes biseautée 4T, 5T avant.

Ainsi, le stratifié 1 ouvert présentera globalement, avant fermeture sur lui-même, et en développée à plat, une forme trapézoïdale, telle que cela est visible sur la figure 9.

Selon un agencement préférentiel, les bandelettes 6 constitutives de la première nappe 4 étant juxtaposées, selon la direction longitudinale L0, conformément à un pas de répétition P6 constant, dit « pas de première nappe » P6, alors le décalage longitudinal d0 entre la première pointe 4T et la seconde pointe 5T peut avantageusement correspondre à une distance qui est égale à la somme de la longueur de première pointe L_4T et d'une valeur additionnelle d_add, ladite valeur additionnelle d_add étant comprise entre 20 % et 80 % du pas de première nappe P6, de préférence entre 30 % et 75 % du pas de première nappe P6, et plus préférentiellement égale à 50 % (soit la moitié) du pas de première nappe P6, soit : d0 = L_4T + d_add, avec de préférence d0 = L_4T + (P6/2). On notera qu'un tel agencement peut constituer une invention à part entière, applicable à la fabrication d'un stratifié 1, et ce quel que soit le devenir dudit stratifié et indépendamment des modalités d'un éventuel transfert dudit stratifié 1 d'un support à un autre support.

En plaçant la seconde pointe 5T, par laquelle débute la seconde nappe 5, en retrait de la base 4B de la première pointe 4T, ici d'une valeur égale au demi-pas de première nappe P6, de sorte que ladite seconde pointe 5T débute sensiblement voire exactement en vis-à-vis du milieu de la largeur W6 de la première bandelette 6 constitutive de la première nappe 4, selon la direction longitudinale L0, on s'assurera que le second front avant 5F soit suffisamment éloigné des lisières de ladite bandelette 6, et en particulier du premier front avant 4F correspondant à la lisière de la première desdites bandelettes 6, ce qui évitera, après enroulement, toute coïncidence spatiale, et plus particulièrement tout croisement, entre la première soudure 4J et la seconde soudure 5J, et donc toute fragilisation du stratifié 1.

De préférence, au cours du procédé, on définit une longueur L4 développée de première nappe, que l'on souhaite conférer à la première nappe 4 lors de sa réalisation par pose de la première succession de bandelettes 6 sur la virole 3, et l'on calcule en conséquence un premier pas angulaire de pose P6_angular qui correspond au pas de première nappe P6 selon lequel on dispose l'une après l'autre, autour de l'axe central de la virole Z3, les bandelettes 6 constitutives de la première nappe, de telle sorte que ledit premier pas angulaire de pose P6_angular permette d'obtenir la longueur développée L4 de première nappe souhaitée avec un premier nombre entier N6_actual de bandelettes 6.

Plus particulièrement, on peut procéder comme suit :
On considère la longueur L4 de nappe à réaliser, imposée par la dimension du bandage à fabriquer, et donc par la dimension de la circonférence du noyau 10.

On connaît par ailleurs l'angle de nappe théorique voulu, noté A6_th, qui dépend typiquement de l'angle que l'on souhaite conférer aux fils de renfort 8 au sein de la structure du bandage, telle que celle-ci a été spécifiée.

La largeur W6 des bandelettes 6 étant également connue, et en pratique égale à la largeur W9 de la bande continue 9 dont lesdites bandelettes 6 sont issues, le premier pas de nappe théorique P6_th vaut alors : $P6\_th = W6 / \sin(A6\_th)$

Le nombre théorique N6_th de bandelettes 6 nécessaires pour constituer la première nappe 4 est égal au quotient de la longueur L4 voulue par le premier pas de nappe théorique P6_th : $N6\_th = L4 / P6\_th$

Le nombre effectif N6_actual de bandelettes 6 ne pouvant être qu'un entier, on arrondit ce nombre théorique N6_th, de préférence à l'entier le plus proche.

On recalcule alors un pas effectif corrigé de première nappe P6_actual, qui corresponde à ce nombre effectif entier N6_actual de bandelettes 6, et qui vaut donc le quotient de la longueur L4 de nappe souhaitée par le nombre effectif entier de bandelettes :

$$P6\_actual = L4 / N6\_actual$$

La largeur W6 des bandelettes 6 étant une valeur fixe, l'adaptation du pas de première nappe nécessite d'ajuster en conséquence le premier angle de nappe, en choisissant une valeur d'angle de nappe effectif A6_actual qui soit d'une part la plus proche possible de l'angle de nappe théorique A6_th voulu et d'autre part compatible avec le pas effectif corrigé de première nappe P6_actual ; en pratique, on détermine donc l'angle de nappe effectif A6_actual comme étant l'arc-sinus du quotient de la largeur W6 de bandelette 6 par le pas effectif corrigé de première nappe P6_actual :

$$A6\_actual = Arcsin(W6 / P6\_actual)$$

Le pas de pose angulaire P6_angular représente l'incrément angulaire de la virole 3 entre les points de départ respectifs de deux bandelettes 6 successives, c'est-à-dire l'angle de rotation dont il faut faire tourner la virole 3 autour de l'axe de virole Z3 pour que la circonférence de ladite virole 3, c'est-à-dire la première surface de réception 3A, parcoure une distance d'arc égale au pas effectif corrigé de première nappe P6_actual.

Dans la mesure où un incrément angulaire de 2xPi radians correspond à un tour complet de la virole 3, c'est-à- dire à une longueur d'arc valant le périmètre complet de la première surface de réception 3A de ladite virole 3 sur laquelle on effectue la pose, soient D3 x Pi, alors le pas de pose angulaire P6_angular, qui correspond à la fraction que représente le pas effectif corrigé de première nappe P6_actual par rapport à la longueur totale du périmètre de la première surface de pose D3xPi, vaut donc, tel que cela est visible sur la figure 2A :

$$P6\_angular\ [rad] = 2xPi\ x\ P6\_actual\ /\ (D3\ x\ Pi) =\ 2x\ P6\_actual\ /\ D3$$

Par ailleurs, on pourra utiliser de même l'angle de nappe effectif A6_actual, calculé comme indiqué ci-dessus, pour déterminer l'angle de rotation, dit « angle unitaire de pose », noté Thêta_6 sur la figure 2A, que doit effectuer la virole 3 au cours de la pose d'une bandelette 6 pour répartir ladite bandelette 6 en azimut autour de l'axe central Z3 de la virole sur une longueur d'arc dont la développée, notée L6 sur la figure 9, et dite « longueur unitaire de pose » L6, correspond à la valeur géométriquement imposée par le choix dudit angle de nappe effectif A6_actual.

En développée sur la figure 9, en considérant que la première nappe 4 présente, perpendiculairement à la direction longitudinale L0, une largeur de nappe W4, et en posant comme condition que l'angle de nappe considéré vaut l'angle de nappe effectif calculé ci-dessus, soit A6 = A6_actual, alors on établit aisément la relation suivante :

$$tan\ (A6\_actual) = W4\ /\ L6, ce\ qui\ amène\ L6 = W4\ /\ tan(A6\_actual).$$

On convertit ensuite cette longueur unitaire de pose L6 en une valeur angulaire :

$$Thêta\_6\ [rad] = 2\ x\ L6\ /\ D3 = 2\ x\ W4\ /\ (D3\ x\ tan(A6\_actual))$$

On pourra bien entendu procéder de même pour corriger les conditions effectives de pose de la seconde nappe 5 par rapport aux conditions théoriques idéalement souhaitées.

Ainsi, de préférence, on définit une longueur L5 développée de seconde nappe 5, que l'on souhaite conférer à la seconde nappe 5 lors de sa réalisation par pose de la seconde succession de bandelettes 7 sur la virole 3, et l'on calcule en conséquence un second pas angulaire de pose P7_angular, qui correspond au pas de seconde nappe P7 selon lequel on dispose l'une après l'autre, autour de l'axe central de la virole Z3, les bandelettes 7 constitutives de la seconde nappe 5, de telle sorte que ledit second pas angulaire de pose P7_angular permette d'obtenir la longueur développée L5 de seconde nappe souhaitée avec un second nombre entier N7_actual de bandelettes 7.

En outre, selon une caractéristique préférentielle, on peut, pour définir le second pas angulaire de pose P7_angular, prendre en considération l'accroissement du diamètre apparent de pose sur la virole 3, accroissement qui est lié à l'épaisseur H4 de la première nappe 4 déjà présente sur la première surface de réception 3A de la virole au moment où l'on réalise la seconde nappe 5.

En effet, on confectionne la première nappe 4 en posant les bandelettes 6 sur une surface de réception 3A nue, dont le diamètre apparent est donc égal au diamètre D3 externe de ladite virole 3, c'est-à-dire au diamètre D3 de ladite première surface de réception 3A.

En revanche, dans la mesure où la seconde nappe 5 est confectionnée en posant les bandelettes 7 par-dessus la première nappe 4, et donc en surépaisseur de ladite première nappe 4 (au moins sur la longueur de chevauchement mutuel desdites première et secondes nappes 4, 5), cela signifie que, en toute rigueur, la surface sur laquelle on effectue la pose de la seconde nappe 5 est décalée radialement vers l'extérieur, par rapport à la surface nue de la première surface de réception 3A, d'une valeur égale à l'épaisseur H4 de la première nappe 4, si bien que le diamètre apparent de la surface cylindrique sur laquelle on effectue la pose de la seconde nappe 5 est supérieur au diamètre à nu D3 de la première surface de pose 3A, et est égal en l'espèce à la somme du diamètre à nu D3 et de deux fois l'épaisseur H4 de la première nappe (puisqu'il faut ajouter une épaisseur à chaque extrémité du diamètre nu), soient D3 + 2xH4.

Ainsi, après avoir calculé le pas de seconde nappe effectif corrigé P7_actual pour obtenir la longueur L5 souhaitée de seconde nappe 5 avec un nombre entier de bandelettes 7, de manière identique à ce qui a été décrit en référence à la première nappe 4, on considérera que le second pas angulaire de pose doit être :

$$P7\_angular \, [rad] = 2x \, P7\_actual \, / \, (D3 + 2xH4)$$

On pourra procéder de même, c'est-à-dire prendre en considération l'augmentation de diamètre apparent de pose liée à la présence de la première nappe 4 sur le premier support 3, lorsque l'on définira la longueur unitaire de pose de la bandelette 7 constitutive de la seconde nappe, et donc l'angle unitaire de pose dont on doit faire tourner la virole 3 au fur et à mesure que l'on applique ladite bandelette 7 constitutive de la seconde nappe 5 sur la première surface de réception 3A, par-dessus la première nappe 4.

Par ailleurs, on notera que, selon les besoins spécifiés en matière de structure du bandage, la première nappe 4 pourra présenter une largeur W4 (considérée perpendiculairement à la direction longitudinale L0) qui est égale à la largeur W5 de la seconde nappe 5, ou bien au contraire qui est différente de ladite largeur W5 de la seconde nappe.

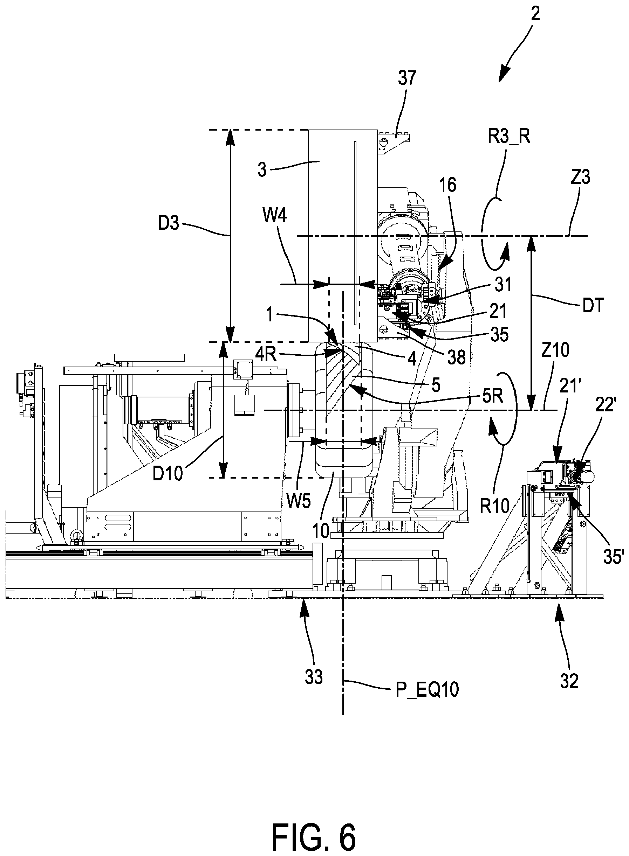

Selon une possibilité préférée d'agencement, la largeur W5 de la seconde nappe 5 pourra ainsi être supérieure à la largeur W4 de la première nappe, tel que cela est visible sur les figures 2B et 6, ce qui permet notamment de conférer une bonne assise, robuste, stable et de forme régulière, au stratifié 1 au niveau des épaules du bandage, à la transition entre d'une part les flancs dudit bandage et d'autre part le sommet dudit bandage qui porte la bande de roulement.

Dans tous les cas, la largeur W5 et la position de la seconde nappe 5 par rapport à la première nappe 4 seront telles que la seconde nappe recouvre, en largeur, au moins 50 %, de préférence au moins 75 %, et préférentiellement 100 %, de la largeur W4 de la première nappe 4, voire déborde en largeur de ladite première nappe 4, de préférence de part et d'autre des bords latéraux de ladite première nappe 4, de chaque côté de la direction longitudinale L0.

La première nappe 4 et la seconde nappe 5 seront par ailleurs de préférence, quelles que soient leurs largeurs respectives, centrées sur une même direction longitudinale L0 commune.

De préférence, on utilise, pour entraîner la virole 3 en rotation R3_F, R3_R, lors de la confection des bandelettes et/ou lors du transfert depuis la virole 3 jusque sur le noyau 10, un système d'entraînement 21, 21' comportant un pignon moteur 22, 22' qui engrène sur une couronne dentée 23 solidaire de la virole 3, ladite couronne dentée 23 étant centrée sur l'axe central de la virole Z3, et agencée de sorte que le rayon de son cercle primitif d'engrènement avec le pignon moteur 22, 22' est compris entre 50 % et 100 %, de préférence entre 60 % et 95 %, et plus préférentiellement entre 62 % et 75 % du rayon hors-tout R3 de la surface radialement externe de la virole 3 formant la première surface de réception 3A. Ledit rayon hors-tout R3 vaut ici la moitié du diamètre D3 de virole susmentionné : R3 = D3/2.

Avantageusement, un tel système d'entraînement 21, 21' qui agit à distance de l'axe central Z3 de rotation, au plus près de la périphérie de la virole 3, et donc au plus près de la surface de réception 3A dont on souhaite contrôler les mouvements, ici plus particulièrement dont on souhaite contrôler l'ampleur des déplacements en rotation azimutale ainsi que la position absolue en azimut autour de l'axe central Z3 de la virole, permet un asservissement angulaire particulièrement précis, peu sensible aux jeux d'engrènement ou à l'inertie de la virole 3.

Par souci de compacité et de simplicité de conception, et pour ne pas interférer avec la confection des nappes 4, 5 puis le transfert du stratifié 1, la couronne dentée 23 sera avantageusement inscrite à l'intérieur de l'enveloppe cylindrique formée par la première surface de réception 3A, et les dents de ladite couronne 23 de préférence orientées radialement vers l'intérieur, en direction de l'axe central Z3 de la virole 3, tel que cela est bien visible sur les figures 1 et 5.

Le pignon moteur 22, 22' pourra avantageusement être entraîné par un moteur, notamment un moteur électrique, dont l'arbre sera pourvu d'un capteur de position angulaire, par exemple de type codeur.

De préférence, tel que cela est visible sur les figures 5 et 8A à 8E, le noyau 10 présente une forme toroïdale galbée de sorte que la seconde surface de réception 10A présente, en section dans un plan contenant l'axe central du noyau Z10, un profil incurvé convexe par rapport à l'extérieur (c'est-à-dire bombé vers l'environnement externe de l'enveloppe de révolution formée par le noyau 10).

De préférence, la forme toroïdale du noyau 10 correspond avantageusement à la forme finale du bandage que l'on souhaite fabriquer.

Ainsi, une fois les différents éléments constitutifs du bandage, dont le stratifié 1, posés sur le noyau 10, on pourra procéder à la cuisson (vulcanisation) du bandage en plaçant ledit noyau 10 dans un moule de cuisson, de forme sensiblement complémentaire à celle du noyau 10, et dont les parois viendront ainsi s'appliquer contre le bandage.

De préférence, simultanément au mouvement de contra-rotation R3_R, R10 permettant de dérouler longitudinalement le stratifié 1 de la virole 3 pour l'enrouler sur la circonférence du noyau 10, on anime la virole 3 d'un mouvement de basculement en roulis β, de manière à déplacer la pression d'appui exercée par la virole 3 vers un côté de la largeur du profil incurvé convexe de la seconde surface de réception 10A du noyau 10 toroïdal, tel que cela est illustré sur les figures 8A à 8E.

La « largeur » du noyau 10 et de son profil incurvé convexe s'entend ici de la dimension axiale dudit noyau 10, considérée parallèlement à l'axe central Z10 dudit noyau, perpendiculairement à la direction longitudinale L0. Le basculement en roulis β correspond ainsi à une modification de l'inclinaison de la virole 3 autour de la tangente à la direction longitudinale L0.

Géométriquement, l'angle de basculement en roulis β correspond à l'angle formé, dans un plan dit « plan méridien » qui contient l'axe central Z10 du noyau et qui est donc perpendiculaire à la direction longitudinale L0 au point considéré, entre le plan équatorial de la virole 3, normal à l'axe central de la virole Z3, et le plan équatorial P_EQ10 du noyau 10, normal à l'axe central Z10 du noyau, et dont l'intersection avec la seconde surface de réception 10A dudit noyau 10 coïncide de préférence avec la direction longitudinale L0.

L'angle de basculement en roulis β indique donc l'inclinaison latérale de la virole 3 par rapport au plan équatorial P_EQ10 du noyau, et donc l'inclinaison latérale de la direction d'appui selon laquelle la virole 3 exerce sa pression d'appui pour plaquer le stratifié 1 sur le noyau 10.

Par convention, l'angle de basculement en roulis β est nul lorsque l'axe central de la virole Z3 est parallèle et coplanaire, c'est-à-dire colinéaire, à l'axe central du noyau Z10, c'est-à-dire lorsque le plan équatorial de la virole et le plan équatorial du noyau sont parallèles, voire confondus, tel que cela est le cas sur les figures 8B et 8D.

De préférence, le basculement en roulis présentera une amplitude qui permettra à la virole 3 de décaler son aire d'appui sur le noyau 10 jusqu'aux bords latéraux du stratifié 1, c'est-à-dire jusqu'aux portions axialement extrémales de la nappe 4, 5, et plus globalement du stratifié 1, afin d'accentuer l'appui sur lesdits bords latéraux, au cours de la pose dudit stratifié 1 sur le noyau 10.

Ainsi, par exemple, lorsque l'on pose sur le noyau 10 une pointe 4T du stratifié 1, et notamment une pointe terminale formant une limite du stratifié 1 selon la direction longitudinale L0, on pourra, de préférence, basculer la virole 3 du côté du noyau 10 (et donc du côté correspondant du plan équatorial P_EQ10) où se trouve ladite pointe 4T, afin d'exercer une pression d'appui et de transfert qui est localisée sur ladite pointe.

De la sorte, on favorisera une application homogène de ladite pointe, ce qui évite notamment que ladite pointe ne se redresse ou ne se déplace sur le noyau 10.

De préférence, on basculera la virole 3 en roulis au moins lors du transfert de la première pointe du stratifié 1, c'est-à-dire lors de la pose sur le noyau 10 de la pointe par laquelle ledit stratifié 1 débute son entrée en contact et son enroulement sur le noyau 10. Ici, en référence aux figues 7A et 8A, la première pointe est la pointe qui débute par le second front arrière 5R oblique. On penchera donc, au début du transfert, la virole 3 du côté de la pointe du second front arrière 5R, ici vers la gauche sur la figure 8A.

Cette précaution est particulièrement utile lorsque la nappe qui vient au contact de la surface de réception 10A du noyau, ici la seconde nappe 5, présente une largeur W5 strictement supérieure à la largeur W4 de la nappe qui se retrouvera radialement plus à l'extérieur par rapport au noyau 10, ici la première nappe 4, comme cela est illustré sur la figure 6, si bien que ladite pointe n'est, localement, pas soutenue ni rigidifiée par la première nappe 4.

La virole 3 pourra ensuite, au fur et à mesure du transfert de la pointe, revenir vers le plan équatorial P_EQ10 du noyau 10, tel que cela est illustré sur la figure 8B, ici en basculant vers le centre selon un mouvement orienté de gauche à droite, voire franchir ledit plan équatorial P_EQ10 en poursuivant son mouvement de basculement vers la droite comme illustré sur la figure 8C, afin que l'aire d'appui de la virole 3 suive sensiblement le tracé du second front arrière 5R d'un bord latéral jusqu'à l'autre bord latéral de la première pointe, et plus globalement d'un bord latéral jusqu'à l'autre bord latéral du stratifié 1.

De préférence, après avoir basculé (ici au moins vers la gauche, puis éventuellement vers la droite) pour assurer une pose soignée et précise de la première pointe du stratifié 1 sur le noyau, la virole 3 revient en position centrale, c'est-à-dire avec un angle de roulis sensiblement voire exactement nul, comme cela est illustré sur la figure 8D, afin de poursuivre la pose du stratifié 1 bi-nappes de manière équilibrée.

Plus globalement, de préférence, en dehors de la pose des pointes, lorsque l'on applique contre le noyau 10 la portion longitudinale centrale du stratifié 1 selon laquelle les première et seconde nappe 4, 5 se chevauchent sur toute leur largeur W4, W5, l'angle de roulis β de la virole 3 sera nul, de sorte que l'on réalise une pose à plat, selon un appui perpendiculaire à l'axe central du noyau Z10 (figures 8B, 8D).

Selon une variante possible de mise en oeuvre, on pourra également mettre en oeuvre un basculement (non nul) en roulis à la fin du tour d'enroulement du stratifié 1 sur le noyau 10, pour accentuer l'appui de la virole 3 sur la pointe terminale qui forme la limite arrière du stratifié 1, par laquelle on termine la pose du stratifié 1 sur le noyau 10, ici la pointe 4T qui s'achève par le premier front avant 4F, comme cela est illustré sur la figure 8E.

Ceci permettra avantageusement d'obtenir une soudure 4J d'excellente qualité.

En particulier, on pourra réaliser, lors de la pose du front avant 4F sur le noyau 10, par-dessus la seconde nappe 5 déjà enroulée sur le noyau 10, un mouvement basculant qui, en combinaison avec la rotation du noyau 10, permet à la virole 3 de parcourir le stratifié 1, ici de droite à gauche sur la figure 8E, jusqu'au bord latéral correspondant à la pointe concernée, par exemple en partant du centre du stratifié (si l'angle de roulis est initialement nul), ou bien en partant du bord latéral opposé dudit stratifié (si la virole bascule préalablement à droite avant d'entamer un retour vers la gauche), de manière à ce que la trajectoire de l'aire d'appui de la virole 3 avec le stratifié 1 suive sensiblement, voire exactement, au moins une partie, voire la totalité, du tracé de la première jonction 4J, et notamment au moins la partie du tracé de la première jonction 4J qui contient l'extrémité libre de la pointe, c'est-à-dire l'extrémité qui rejoint en dernier le noyau 10, ici à gauche sur la figure 8E.

Plus globalement, on notera que la mobilité en roulis β de la virole 3 permet à la première surface de réception 3A de ladite virole 3 d'être (et de rester) tangente à la surface galbée du noyau 10 au point où l'on applique le stratifié 1 à l'instant considéré, et ainsi d'exercer une pression d'appui sensiblement normale à ladite surface galbée au point considéré.

Ainsi, on s'assure que le stratifié 1 épouse parfaitement la forme du noyau 10, et ce y compris si la seconde surface de réception 10A présente certaines aspérités, notamment en raison de la forme des nappes 4, 5, ou bien si une sous-couche constitutive du bandage est déjà présente sur ladite seconde surface de réception 10A au moment où l'on y pose le stratifié 1.

De préférence, tant par simplicité du mouvement que pour assurer un déroulement/enroulement longitudinal homogène du stratifié 1 lors des mouvements de roulis de la virole 3, l'axe central Z3 de la virole 3 reste dans un même plan qui contient l'axe central du noyau Z10, de sorte à effectuer un simple basculement latéral par rapport audit noyau 10.

Selon une caractéristique préférentielle qui peut constituer une invention à part entière, applicable au transfert d'une nappe simple ou d'un stratifié 1 multi-nappes, on utilise, pour tout d'abord réaliser la ou les nappes, ici pour réaliser les première et seconde nappes 4, 5, puis ensuite pour déplacer le premier support 3 et l'amener au contact du second support 10 afin d'opérer le transfert de la nappe concernée, ici plus particulièrement le transfert du stratifié 1, un même bras robotisé 16.

En utilisant un même bras robotisé 16 pour la confection des nappes sur la virole 3 puis pour le transfert du stratifié 1 sur le noyau 10, on dispose avantageusement d'une installation 2 très compacte, avec peu d'emprise au sol, et au sein de laquelle, en particulier, les amplitudes de déplacement, et donc les temps de cycles correspondants, sont particulièrement réduits.

De préférence, le bras robotisé 16 dispose à cet effet d'un poste de changement d'outil automatisé 30, au sein duquel il peut échanger un outil de pose 12, qui est agencé pour confectionner la première nappe 4, et/ou la seconde nappe 5, et plus particulièrement pour confectionner un stratifié 1 contenant les première et seconde nappes 4, 5, sur le premier support 3, de préférence par la pose de bandelettes 6, 7 juxtaposées, contre un outil de préhension 31, qui est agencé pour saisir et manipuler le premier support 3 de manière à pouvoir transporter ledit premier support 3 jusqu'au noyau 10 puis exécuter le transfert de la première nappe 4, et/ou de la seconde nappe 5, et plus préférentiellement du stratifié 1 sur ledit noyau 10.

Avantageusement, l'invention permet donc de partager un même premier support 3, ici la virole 3, ainsi qu'un même bras robotisé 16, de préférence unique, entre le poste de confection 32 des nappes 4, 5 et le poste de transfert 33. En particulier, une seule et même virole 3 mutualisée formera à la fois un support de confection, puis un support de transport et de transfert sur le noyau 10, le bras robotisé 16 permettant à ladite virole 3 de faire la navette entre le poste de confection 32 et le poste de transfert 33.

La reconfiguration du bras robotisé 16 entre le poste de confection 32 et le poste de transfert 33, et réciproquement, se fera par un changement automatique d'outil 12, 31, au cours duquel, de préférence, on détachera automatiquement du poignet 20 un premier outil 12 initialement embarqué sur le poignet 20, par exemple l'outil de pose 12 susmentionné, pour séparer ledit premier outil 12 du poignet et placer ledit premier outil en attente dans une aire de stockage du poste de changement d'outil 30, tel qu'un râtelier 34 formant un magasin d'outils, et l'on engagera automatiquement à la place dudit premier outil 12, sur le poignet 20, un second outil 32, par exemple l'outil de préhension 31 susmentionné.

En variante, on pourrait prévoir un poignet 20 embarquant une tête pivotante qui serait pourvue des deux outils (respectivement l'outil de pose 12, et l'outil de préhension 31), et qui serait donc apte à opérer une permutation entre lesdits outils au gré des besoins.

Toutefois, on préférera embarquer un seul outil 12, 31 à la fois sur le poignet 20, à savoir ici soit l'outil de pose 12 seul, soit l'outil de préhension 31 seul, afin de limiter l'encombrement, ainsi que les phénomènes d'inertie et de flexion du bras robotisé 16, et de pouvoir par conséquent gagner en adresse et en précision.

L'outil de pose 12 pourra être tel qu'il a été décrit dans ce qui précède, et comporter ainsi un galet presseur 13, un dispositif d'acheminement 14 apportant la bande continue 9, et un dispositif de coupe 15 débitant les bandelettes 6, 7 à la volée.

L'outil de préhension 31 comprendra de préférence d'une part un mécanisme de bridage 35, agencé pour pouvoir automatiquement saisir, puis ensuite relâcher, un châssis 36 portant la virole 3, et d'autre part un système d'entraînement 21 tel que décrit plus haut, lequel comprend un pignon moteur 22 destiné à venir engrener sur une couronne dentée 23 solidaire de la surface de réception 3A de la virole 3, de sorte à pouvoir entraîner la virole 3 en rotation autour de son axe central Z3, par rapport au châssis 36.

A noter que l'installation 2 comprend de préférence deux systèmes d'entraînement 21, 21', à savoir d'une part un premier système d'entraînement 21 « volant », qui est intégré à l'outil de préhension 31 et destiné à être embarqué sur le bras robotisé 16 pour permettre l'entraînement de la virole 3 en rotation lors du transfert du stratifié 1, au niveau du poste de transfert 33, et d'autre part un second système d'entraînement 21' « fixe », qui est intégré au poste de confection 32, pour pouvoir entraîner la virole 3 en rotation lors de la confection de la première nappe 4 puis de la seconde nappe 5, tandis que le bras robotisé 16 est équipé de l'outil de pose 12 pour générer et appliquer les bandelettes 6, 7 sur la virole 3.

De préférence, les deux systèmes d'entraînement 21, 21' présenteront une structure similaire, et comprendront notamment chacun un pignon moteur 22, 22' de même nature destiné à venir coopérer avec la couronne dentée 23, solidaire de la virole 3, pour entraîner ladite virole 3 en rotation par rapport au châssis 36.

De même, le poste de confection 32 comprendra de préférence un (second) mécanisme de bridage 35' « fixe » sensiblement identique au (premier) mécanisme de bridage 35 « volant » qui équipe l'outil de préhension 31 destiné à être embarqué sur le bras robotisé 16. Ce second mécanisme de bridage 35' fixe permettra de verrouiller le châssis 36 portant la virole 3 sur ledit poste de confection 32, tel que cela est notamment visible sur la figure 1.

Plus préférentiellement, le châssis 36 portant la virole 3, et qui forme avec ladite virole 3 un sous-ensemble déplaçable par le bras robotisé 16 depuis le poste de confection 32 jusqu'au poste de transfert 33 et réciproquement, comprendra une première patte de retenue 37 et une seconde patte de retenue 38, diamétralement opposée à la première patte de retenue 37 par rapport à l'axe central de la virole Z3.

Ces pattes de retenue 37, 38 seront agencées de telle sorte que la première patte de retenue 37 pourra se verrouiller sur le mécanisme de bridage 35' fixe, lorsque la virole 3 occupe le poste de confection 32, tandis que la seconde patte de retenue 38 pourra être saisie par le mécanisme de bridage 35 volant de l'outil de préhension 31, lorsque le bras robotisé 16 doit saisir et déplacer la virole 3 jusqu'au poste de transfert 33, puis mettre la virole en rotation au niveau dudit poste de transfert 33.

De préférence, les deux mécanismes de bridage 35, 35' étant identiques, les première et seconde pattes de retenue 37, 38 présenteront elles-mêmes un agencement identique, et seront symétriques l'une de l'autre par rapport à un plan de symétrie contenant l'axe central Z3 de la virole.

Les mécanismes de bridage 35, 35' pourront bien entendu comprendre chacun tout type de mors ou de verrou piloté automatiquement, de sorte à pouvoir venir alternativement en prise sur leur patte de retenue 38, 37 respective.

Un exemple de fonctionnement de l'installation 2 va maintenant être décrit plus en détail, en relation avec les figures fournies.

Initialement, la virole 3 se trouve au poste de confection 32, son châssis 36 étant maintenu par le mécanisme de bridage 35' fixe qui serre la première patte de retenue 37, tel que cela est illustré sur la figure 1.

La confection de la première nappe 4 est réalisée en posant sur la première surface de réception 3A de la virole 3 une série de bandelettes 6 juxtaposées par leurs lisières. Chaque bandelette 6 est pressée contre la virole 3, par le dessus, au moyen de l'outil de pose 12 porté par le poignet 20 du bras robotisé 16. Pour assurer la pose de chaque bandelette 6 selon l'angle de nappe A6 souhaité, on combine un mouvement de rotation R3_F (ici par convention une rotation avant) de la virole 3, mue par le pignon moteur 22' du poste de confection 32 qui vient en prise sur la couronne dentée 23, avec un mouvement de translation T20 rectiligne, ici horizontale, du poignet 20 du bras robotisé 16 et donc de l'outil de pose 12. Pour chaque bandelette, l'amplitude du mouvement de translation est sensiblement voire exactement égale à la largeur W4 de la première nappe 4, tandis que l'amplitude du mouvement de rotation R3F, réalisé simultanément, correspond à l'angle unitaire de pose Thêta_6 tel que calculé comme indiqué plus haut.

Avantageusement, l'appui vertical du galet presseur 13 de l'outil de pose 12 contre le point verticalement le plus élevé de la première surface de réception 3A de la virole, à la verticale de l'axe central Z3 de rotation, permet de soulager le poids du bras robotisé 16 et de l'outil de pose 12, ce qui limite les phénomènes de flexion et permet de gagner en précision.

Une fois la première nappe 4 constituée, comme illustré sur la figure 2A, on procède de manière analogue, après avoir préalablement repositionné angulairement la virole 3 en azimut pour créer le décalage longitudinal d0 souhaité, pour constituer à partir de bandelettes 7 la seconde nappe 5, qui se superpose à la première nappe 4 sur la première surface de réception 3 pour former le stratifié 1 visible sur la figure 2B.

Une fois la seconde nappe 5 constituée, le bras robotisé 16 gagne le poste de changement d'outil 30, où il détache l'outil de pose 12 du poignet 20, afin de déposer ledit outil de pose 12 dans un emplacement prévu à cet effet au sein du magasin d'outils 34, puis il prélève l'outil de préhension 31, qu'il embarque sur le poignet 20. Ce changement d'outil s'opère avantageusement de manière automatique.

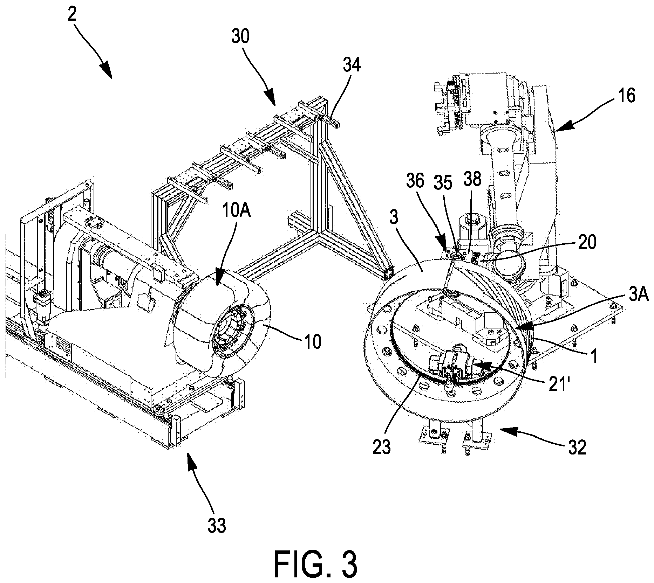

Le bras robotisé 16 revient alors au poste de confection 32, ou il saisit le châssis 36 de la virole 3 en enclenchant le mécanisme de bridage 35 volant porté par l'outil de préhension 31 de manière à ce que ledit mécanisme de bridage 35 volant vienne en prise avec la seconde patte de retenue 38 (figure 3).

Le poste de confection 32 libère alors la virole 3, en relâchant la prise du mécanisme de bridage 35' fixe sur la première patte de retenue 37.

Le bras robotisé 16 transporte alors la virole 3 portant le stratifié 1, avec son châssis 36, jusqu'au poste de transfert 33.

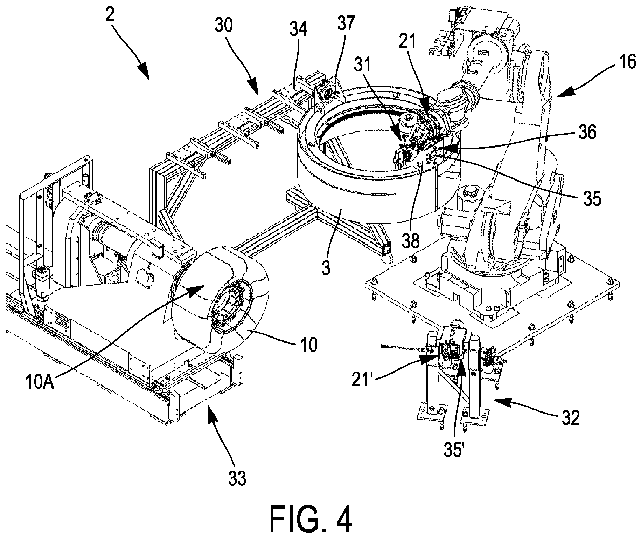

De préférence, sur le trajet, le poignet 20 exécute une rotation, de sorte à exécuter un retournement vertical de la virole 3, tel que cela apparaît sur la succession des figures 3, 4 puis 5, afin que le poignet 20 et l'outil de préhension 31, et plus particulièrement son système d'entraînement 21, se retrouvent au point bas de la virole 3, et que ladite virole 3 se présente par le dessus par rapport au noyau 10, de manière à ce que le point bas de la première surface de réception 3A de la virole, portant le stratifié 1, vienne se poser sur le sommet du noyau 10, de préférence à la verticale de l'axe central Z10 de rotation du noyau 10, tel que cela est illustré sur la figure 5.

Le transfert du stratifié 1 depuis la virole 3 jusque sur le noyau 10 est alors accompli en mettant en rotation R3_R, R10 contraire et synchrone la virole 3 d'une part, entraînée par le système d'entraînement 21 intégré à l'outil de préhension 31, et le noyau 10 d'autre part, porté par un arbre rotatif monté sur un bâti fixe du poste de transfert 33. On notera que la virole 3 tourne ici dans un sens arrière R3_R, qui est contraire au sens avant R3_F qui avait été mis en oeuvre pour répartir en azimut les bandelettes 6, 7 sur la circonférence de la virole 3 lors de la confection des nappes 4, 5.

Avantageusement, une telle configuration de transfert, selon laquelle la virole 3 repose et roule sur le dessus du noyau 10, permettra non seulement de soulager le bras robotisé 16 d'au moins une partie du poids de la virole 3 et de l'outil de préhension 31 lors du transfert, mais également de contrôler précisément le mouvement de rotation R3_R de la virole généré et piloté par le système d'entraînement 21 de l'outil de préhension 31, au plus près de la première surface de réception 3A dont se détache progressivement le stratifié 1.

Il en résultera une précision et une stabilité accrues du transfert.

Au terme d'un seul et unique tour effectué par le noyau 10, le transfert s'achève lorsque le stratifié 1 se referme en anneau sur lui-même, chacune des première et seconde nappe 4, 5 opérant une jonction 4J, 5J de ses extrémités 4F, 4R, 5F, 5R respectives.

Le bras robotisé 16 rapporte alors la virole 3, vide, sur le poste de confection 32, où le mécanisme de bridage 35' fixe s'enclenche pour solidariser la première patte de retenue 37 de ladite virole 3 audit poste de confection 32.

Le bras robotisé 16 actionne alors le mécanisme de bridage 35 intégré à l'outil de préhension 31 de sorte à libérer la seconde patte de retenue 38, et se rend au poste de changement d'outil 30 où il échange l'outil de préhension 31 contre l'outil de pose 12.

Le bras robotisé 16, à nouveau pourvu dudit outil de pose 12, se présente alors en vis-à-vis de la virole 3 vide pour débuter un nouveau cycle de confection de nappes 4, 5.

Pendant ce temps, en temps masqué, le noyau 10 portant le stratifié 1 peut être revêtu d'éventuelles couches supplémentaires constitutives du bandage, par exemple d'une bande de roulement, et/ou d'une frette circonférentielle qui est obtenue en enroulant, selon des spires jointives, par trancanage, une bande continue contenant des fils de renforts longitudinaux continus, puis/ou ledit noyau 10 portant le stratifié 1 peut être acheminé vers un moule de cuisson pour vulcaniser ledit bandage, et plus particulièrement le stratifié 1.

Un nouveau noyau 10 noyau, vide, pourra se positionner sur le poste de transfert 33 pour recevoir le prochain stratifié 1.

On pourra bien entendu prévoir un jeu de plusieurs noyaux 10 permettant de vulcaniser les stratifiés, et plus globalement les bandages, sans interrompre le cycle de préparation incluant la confection puis le transfert des stratifiés 1 successifs sur les noyaux 10 successifs.

Par ailleurs, préalablement à la réalisation des première et seconde nappes 4, 5, on procède de préférence, par exemple au moyen d'un palpeur mécanique ou optique, à une mesure du rayon, du diamètre D10 ou de la circonférence du noyau 10 afin de déterminer la longueur développée L10 de la circonférence de la seconde surface de réception 10A, dite « longueur effective de seconde surface de réception» L10, et, au cours de l'étape de réalisation des première et seconde nappes 4, 5, on adapte, en fonction de cette longueur effective de seconde surface de réception L10, les longueurs L4, L5 que l'on confère respectivement aux première et seconde nappes 4, 5 lorsque l'on constitue lesdites première et seconde nappe 4, 5 sur la première surface de réception 3A.

En d'autres termes, grâce à l'invention, au lieu de confectionner des nappes 4, 5, et donc un stratifié 1, qui présentent initialement une longueur approximative, puis d'ajuster ensuite ledit stratifié à la circonférence du noyau 10 pendant le transfert, c'est-à-dire en aval du processus, en étirant plus ou moins ledit stratifié 1 grâce à une modification du rapport de synchronisation entre les rotations respectives de la virole R3_R et du noyau R10, afin de compenser un éventuel écart entre la longueur initiale et la longueur souhaitée du stratifié 1, on ajuste désormais de façon très exacte les longueurs L4, L5 des nappes 4, 5 en amont du processus, directement lors de l'étape de confection, de sorte à présenter, lors du transfert, un stratifié 1 qui possède d'emblée une longueur exactement adaptée à un enroulement dudit stratifié sur un tour de noyau 10, et qui n'a donc pas besoin d'être étiré ou, plus globalement, modifié en longueur pour venir envelopper le noyau 10 et se refermer exactement sur lui-même, en assurant une parfaite continuité de chaque couche constituée par l'une des première et seconde nappe 4, 5.

Les longueurs L4, L5 des première et seconde nappe 4, 5 pourront être ajustées lors de la confection en adaptant les valeurs d'angle de nappe A6, A7, et donc les valeurs des pas de pose P6, P7 utilisés, comme expliqué plus haut.

On notera que le fait de déduire d'une mesure des dimensions du noyau 10 les longueurs exactes L4, L5 à conférer aux première et seconde nappes 4, 5 lors de la confection présente plusieurs avantages.

Un premier avantage est qu'il rend le procédé très polyvalent, puisque tout changement de dimension du noyau 10 sera immédiatement perçu, et la confection des bandelettes 4, 5 adaptée en conséquence. Ainsi, l'installation s'adaptera rapidement et automatiquement aux « changements de dimensions », c'est-à-dire aux changements de série des bandages à fabriquer, ce qui permettra un gain de réactivité en cas de fabrications en petites séries appelant de fréquents changements de dimensions.

Un second avantage tient au fait qu'il est mécaniquement plus difficile d'étirer un stratifié 1 comportant plusieurs nappes superposées qu'une structure monocouche plus fine comportant une seule nappe, en raison de la raideur intrinsèque d'un tel stratifié 1, bien supérieure à la raideur individuelle des couches qui le composent. Par conséquent, le procédé qui consisterait à corriger la longueur par étirement lors du transfert, tel que cela est connu pour ajuster la longueur de nappes seules, serait vraisemblablement mal adapté à la gestion de la longueur d'un stratifié 1.

Un troisième avantage tient au fait que, si l'on cherchait à adapter la longueur du stratifié en l'étirant, l'étirement agirait simultanément sur les deux nappes 4, 5 constitutives dudit stratifié 1. Or, il est possible, voire probable que, dans la plupart des cas, un ajustement de longueur déterminé au regard de la première nappe 4, pour permettre à la soudure 4J de la première nappe de s'opérer dans des conditions satisfaisantes, ne conviendrait pas à la seconde nappe 5, qui nécessiterait quant à elle un ajustement différent, voire aucun ajustement.

Ainsi, si l'on agissait simultanément sur les deux nappes 4, 5 par étirement global du stratifié 1 à un stade tardif, c'est-à-dire après constitution du stratifié 1 et par exemple lors du transfert dudit stratifié 1 sur le noyau 10, alors la modification de la longueur de la première nappe 4, destinée à garantir une soudure 4J parfaite de ladite première nappe sur elle-même induirait également, du fait du couplage des nappes 4, 5 groupées au sein du stratifié 1, une modification de la longueur de la seconde nappe 5, qui pourrait quant à elle dégrader la qualité de la soudure 5J de ladite seconde nappe 5.

Avantageusement, en traitant le problème de la longueur des nappes L4, L5 en amont du processus, de manière à définir individuellement, pour chacune des nappes 4, 5, lors de la confection, la longueur L4, L5 qui garantira une soudure 4J, 5J convenable de la nappe 4, 5 considérée, l'invention permet d'assurer une maîtrise individuelle, dissociée, de chacune desdites soudures 4J, 5J.

Le palpeur destiné à évaluer la longueur effective de seconde surface de réception L10 pourra évaluer ladite longueur L10 soit directement, en venant mesurer la circonférence du noyau 10, par exemple en appliquant contre la surface circonférentielle du noyau un rouleau libre, associé à un capteur angulaire, du genre resolver, et qui sera entraîné par friction par la surface du noyau, soit indirectement en venant mesurer une autre cote représentative de ladite longueur, telle que le diamètre D 10 du noyau ou le rayon dudit noyau 10.

Ledit palpeur pourra par exemple être porté par le bras robotisé 16, et venir palper, par abord radial centripète, la surface de réception 10A du noyau tandis que l'on mettra en rotation le noyau autour de son axe central Z10.

Bien entendu, l'invention concerne également en tant que tel un procédé de fabrication d'un bandage pneumatique au cours duquel, conformément à l'une quelconque des caractéristiques susmentionnées, on réalise un stratifié 1 comprenant une première nappe 4 formée par une succession de bandelettes 6 à base de caoutchouc cru, de préférence contenant des fils de renforts 8 continus disposés parallèlement dans le sens de la longueur desdites bandelettes 6, et une seconde nappe 5 formée par une succession de bandelettes 7 à base de caoutchouc cru, de préférence contenant des fils de renforts 8 continus disposés parallèlement dans le sens de la longueur desdites bandelettes 7, puis l'on transfère ledit stratifié 1 sur le noyau 10, et l'on place ledit noyau 10 dans un moule de cuisson afin de vulcaniser ledit stratifié 1, et plus globalement afin de vulcaniser le bandage complet.

De préférence, la première nappe 4 et la seconde nappe 5 correspondent à des « nappes sommet », formant des renforts croisés, qui viennent se superposer à une nappe carcasse, de sorte à ce que les fils de renforts 8 forment globalement, en superposition, des structures triangulaires de renfort du bandage. On pourra du reste, avant vulcanisation, placer sur le noyau, par-dessus les première et seconde nappes 4, 5, d'autres couches constitutives du sommet du bandage, telles que par exemple une frette circonférentielle et une bande de roulement.

Dans tous les cas, le noyau 10 est de préférence « dimensionnel », en ceci qu'il présente les formes et dimensions définitives du bandage que l'on souhaite obtenir, et qu'il permet donc une vulcanisation en l'état dudit bandage, qui reste au contact dudit noyau 10 pendant la vulcanisation, sans qu'il soit nécessaire de réaliser une conformation supplémentaire dudit bandage au sein du moule, par exemple par gonflage.

**Revendications**

1. Procédé de fabrication d'un stratifié (1) de forme annulaire destiné à entrer dans la constitution d'un bandage, notamment d'un bandage pneumatique, procédé au cours duquel :

- on réalise sur un premier support (3), présentant une première surface de réception (3A), une première nappe (4) qui s'étend, selon une direction longitudinale (L0), depuis un premier front avant (4F) jusqu'à un premier front arrière (4R),
- puis on réalise sur le même premier support (3), par-dessus la première nappe (4), une seconde nappe (5) qui s'étend, selon la direction longitudinale (L0), depuis un second front avant (5F) jusqu'à un second front arrière (5R), si bien que l'on obtient, sur le premier support (3A), un stratifié (1) qui s'étend en épaisseur (H1) depuis une première face (1A), appliquée contre la première surface de réception (3A), jusqu'à une seconde face (1B) opposée, et qui comprend, dans ladite épaisseur (H1), au moins une première couche, formée par la première nappe (4), et une seconde couche, formée par la seconde nappe (5), de sorte que la première nappe (4) est prise en sandwich entre la seconde nappe (5) et la première surface de réception (3A),
- puis on transfère ledit stratifié (1) sur un second support (10), dit « noyau » (10), qui présente une seconde surface de réception (10A) ayant une forme de révolution centrée sur un axe central (Z10), ledit transfert étant réalisé en appliquant la seconde face (1B) du stratifié (1) contre la seconde surface de réception (10A) du noyau (10) et en enroulant ledit stratifié (1) sur la circonférence de ladite seconde surface de réception (10A) jusqu'à ce que le second front avant (5F) opère une jonction avec le second front arrière (5R), fermant ainsi la seconde nappe (5) sur elle-même, et que le premier front avant (4F) opère une jonction avec le premier front arrière (4R), fermant ainsi la première nappe (4) sur-elle-même, de sorte à refermer ledit stratifié (1) sur lui-même en un anneau autour de l'axe central du noyau (Z10).

2. Procédé selon la revendication 1 **caractérisé en ce que**, sur le premier support (3), la seconde nappe (5) présente un décalage longitudinal (d0) par rapport à la première nappe (4), de sorte que, si l'on parcourt le stratifié (1) le long de la direction longitudinale (L0) selon un premier sens (F1), dit « sens de confection » (F1), le premier front avant (4F), par lequel débute la première nappe (4), précède le second front avant (5F) par lequel débute la seconde nappe (5), de sorte que la première nappe (4) reste apparente et non recouverte par la seconde nappe (5) entre le premier front avant (4F) et le second front avant (5F), tandis que le premier front arrière (4R) par lequel se termine la première nappe (4) précède le second front arrière (5R) par lequel se termine la seconde nappe (5), de sorte que la seconde nappe (5) recouvre le premier front arrière (4R) de la première nappe et déborde longitudinalement au-delà de la première nappe (4), et **en ce que** l'on exécute le transfert sur le noyau (10) selon un mouvement d'enroulement (R3_R, R10) dirigé de telle manière que le contact progressif entre le noyau (10) et le stratifié (1) s'opère, le long de la direction longitudinale (L0), selon un second sens (F2), opposé au premier sens (F1), et dit « sens d'application lors du transfert » (F2), de sorte que l'on débute le transfert par le second front arrière (5R) de la seconde nappe (5), et que l'on achève ledit transfert par le premier front avant (4F) de la première nappe (4) après avoir posé successivement sur le noyau (10) le premier front arrière (4R) de la première nappe (4) puis le second front avant (5F) de la seconde nappe.

3. Procédé selon la revendication 1 ou 2 **caractérisé en ce que** la première nappe (4) est réalisée en posant sur la première surface de réception (3A) une première succession de bandelettes (6) que l'on aboute les unes aux autres, et la seconde nappe (5) est réalisée en posant sur la première nappe (4) une seconde succession de bandelettes (7) que l'on aboute les unes aux autres.

4. Procédé selon la revendication 3 **caractérisé en ce que** les bandelettes (6) constitutives de la première nappe (4) sont posées selon un premier angle dit « premier angle de nappe » (A6) non nul par rapport à la direction longitudinale (L0), tandis que les bandelettes (7) constitutives de la seconde nappe (5) sont posées selon un second angle, dit « second angle de nappe » (A7), qui est différent du premier angle de nappe (A6), par exemple de même valeur que le premier angle de nappe et de signe opposé, de sorte que les bandelettes (7) constitutives de la seconde nappe (5) forment une structure croisée avec les bandelettes (6) constitutives de la première nappe (4).

5. Procédé selon la revendication 4 et la revendication 2 **caractérisé en ce que** le premier angle de nappe (A6) confère à la première nappe (4) une première pointe biseautée (4T) qui est délimitée par le premier front avant (4F) de ladite première nappe (4) et qui s'étend, selon la direction longitudinale (L0), sur une longueur dite « longueur de première pointe » (L_4T), **en ce que** le second angle de nappe (A7) confère à la seconde nappe (5) une seconde pointe biseautée (5T) délimitée par le second front avant (5F), et **en ce que** la seconde pointe biseautée (5T) est placée en retrait de la première pointe biseautée (4T), dans le sens de confection (F1), d'une valeur de décalage longitudinal

(d0) qui est supérieure à la longueur (L_4T) de première pointe (4T).

6. Procédé selon la revendication 5 **caractérisée en ce que** les bandelettes (6) constitutives de la première nappe (4) sont juxtaposées, selon la direction longitudinale (L0), conformément à un pas de répétition (P6) constant, dit « pas de première nappe » (P6), et **en ce que** le décalage longitudinal (d0) entre la première pointe (4T) et la seconde pointe (5T) correspond à une distance égale à la somme de la longueur de première pointe (L_4T) et d'une valeur additionnelle (d_add), ladite valeur additionnelle (d_add) étant comprise entre 20 % et 80 % du pas de première nappe (P6), de préférence entre 30 % et 75 % du pas de première nappe (P6), et plus préférentiellement égale à 50 % du pas de première nappe (P6).

7. Procédé selon l'une des revendications précédentes, **caractérisé en ce que** le premier support (3) est formé par une virole (3) cylindrique de base circulaire centrée sur un axe dit « axe central de virole » (Z3), dont la surface radialement externe forme la première surface de réception (3A), et dont la circonférence est strictement supérieure à la circonférence du noyau (10), et **en ce que** le transfert est réalisé en appliquant ladite virole (3) portant le stratifié (1) contre le noyau (10), de sorte à prendre en sandwich le stratifié (1) entre la première surface de réception (3A) de la virole et la seconde surface de réception (10A) du noyau, puis en mettant la virole (3) et le noyau (10) en mouvement relatif de contra-rotation (R3_R, R10).

8. Procédé selon la revendication 7 **caractérisé en ce que** l'on utilise, pour entraîner la virole (3) en rotation (R3_F, R3_R), un système d'entraînement (21) comportant un pignon moteur (22) qui engrène sur une couronne dentée (23) solidaire de la virole (3), ladite couronne dentée étant centrée sur l'axe central (Z3) de la virole, et agencée de sorte que le rayon de son cercle primitif d'engrènement avec le pignon moteur (22) est compris entre 50 % et 100 %, de préférence entre 60 % et 95 %, et plus préférentiellement entre 62 % et 75 % du rayon hors-tout (R3) de la surface radialement externe de la virole formant la première surface de réception (3A).

9. Procédé selon la revendication 7 ou 8 **caractérisé en ce que** le noyau (10) présente une forme toroïdale galbée de sorte que la seconde surface de réception (10A) présente, en section dans un plan contenant l'axe central du noyau (Z10), un profil incurvé convexe par rapport à l'extérieur, et **en ce que**, simultanément au mouvement de contra-rotation (R3_R, R10) permettant de dérouler longitudinalement le stratifié (1) de la virole (3) pour l'enrouler sur la circonférence du noyau (10), on anime la virole (3) d'un mouvement de basculement en roulis (β), de manière à déplacer la pression d'appui exercée par la virole (3) vers un côté de la largeur du profil incurvé convexe de la seconde surface de réception (10A) du noyau toroïdal.

10. Procédé selon l'une des revendications précédentes **caractérisé en ce que** l'on utilise, pour tout d'abord réaliser les première et seconde nappes (4, 5), puis ensuite pour déplacer le premier support (3) et l'amener au contact du second support (10) afin d'opérer le transfert du stratifié (1), un même bras robotisé (16), et **en ce que** ledit bras robotisé (16) dispose à cet effet d'un poste de changement d'outil (30) automatisé, au sein duquel il peut échanger un outil de pose (12), agencé pour confectionner les première et seconde nappes (4, 5) sur le premier support 3, de préférence par la pose de bandelettes (6, 7) juxtaposées, contre un outil de préhension (31), agencé pour saisir et manipuler le premier support (3) de manière à pouvoir transporter ledit premier support (3) jusqu'au noyau (10) puis exécuter le transfert du stratifié (1) sur ledit noyau (10).

11. Procédé selon les revendications 3 et 7 **caractérisé en ce que** l'on définit une longueur développée de première nappe (L4), que l'on souhaite conférer à la première nappe (4) lors de sa réalisation par pose de la première succession de bandelettes (6) sur la virole (3), ainsi qu'une longueur développée de seconde nappe (L5), que l'on souhaite conférer à la seconde nappe (5) lors de sa réalisation par pose de la seconde succession de bandelettes (7) sur la virole (3), et l'on calcule en conséquence un premier pas angulaire de pose (P6_angular) qui correspond au pas de première nappe (P6) selon lequel on dispose l'une après l'autre, autour de l'axe central de la virole (Z3), les bandelettes (6) constitutives de la première nappe (4), de telle sorte que ledit premier pas angulaire de pose (P6_angular) permette d'obtenir la longueur développée (L4) de première nappe souhaitée avec un premier nombre entier de bandelettes (6), et, de même, on calcule un second pas angulaire de pose (P7_angular), qui correspond au pas de seconde nappe (P7) selon lequel on dispose l'une après l'autre, autour de l'axe central de la virole (Z3), les bandelettes (7) constitutives de la seconde nappe (5), de telle sorte que ledit second pas angulaire de pose (P7_angular) permette d'obtenir la longueur développée (L5) de seconde nappe souhaitée avec un second nombre entier de bandelettes (7), et **en ce que**, pour définir le second pas angulaire de pose (P7_angular), on prend en considération l'accroissement du diamètre apparent de pose sur la virole (3) qui est lié à l'épaisseur (H4) de la première nappe (4) déjà présente sur la première surface de réception (3A) de la virole au moment où l'on réalise la seconde nappe (5).

12. Procédé selon l'une des revendications précédentes **caractérisé en ce que**, préalablement à la réalisation des première et seconde nappes (4, 5), on procède, par exemple au moyen d'un palpeur mécanique ou optique, à une mesure du rayon, du diamètre (D10) ou de la circonférence du noyau (10) afin de déterminer la longueur développée (L10) de la circonférence de la seconde surface de réception (10A), dite « longueur effective de seconde surface de réception » (L10), et, au cours de l'étape de réalisation des première et seconde nappe (4, 5), on adapte, en fonction de cette longueur effective de seconde surface de réception (L10), les longueurs (L4, L5) que l'on confère respectivement aux première et seconde nappes lorsque l'on constitue lesdites première et seconde nappe (4, 5) sur la première surface de réception (3A).

13. Procédé de fabrication d'un bandage pneumatique au cours duquel, conformément à l'une quelconque des revendications 1 à 12, on réalise un stratifié (1) comprenant une première nappe (4) formée par une succession de bandelettes (6) à base de caoutchouc cru, de préférence contenant des fils de renforts (8) continus disposés parallèlement dans le sens de la longueur desdites bandelettes (6), et une seconde nappe (5) formée par une succession de bandelettes (7) à base de caoutchouc cru, de préférence contenant des fils de renforts (8) continus disposés parallèlement dans le sens de la longueur desdites bandelettes (7), puis l'on transfère ledit stratifié (1) sur le noyau (10), et l'on place ledit noyau (10) dans un moule de cuisson afin de vulcaniser ledit stratifié (1).

## Patentansprüche

1. Verfahren zur Herstellung eines ringförmigen Schichtstoffs (1), der dazu bestimmt ist, in den Aufbau eines Reifens, insbesondere eines Luftreifens, einzugehen, wobei im Verlauf des Verfahrens:

   - auf einem ersten Träger (3), der eine erste Aufnahmefläche (3A) aufweist, eine erste Lage (4) hergestellt wird, die sich in einer Längsrichtung (L0) von einer ersten vorderen Front (4F) zu einer ersten hinteren Front (4R) erstreckt,
   - anschließend auf demselben ersten Träger (3) über der ersten Lage (4) eine zweite Lage (5) hergestellt wird, die sich in der Längsrichtung (L0) von einer zweiten vorderen Front (5F) zu einer zweiten hinteren Front (5R) erstreckt, sodass auf dem ersten Träger (3A) ein Schichtstoff (1) erhalten wird, der sich in der Dicke (H1) von einer ersten Fläche (1A), die an der ersten Aufnahmefläche (3A) anliegt, zu einer gegenüberliegenden zweiten Fläche (1B) erstreckt und der in der Dicke (H1) mindestens eine durch die erste Lage (4) ausgebildete erste Schicht und eine durch die zweite Lage (5) ausgebildete zweite Schicht umfasst, sodass die erste Lage (4) sandwichartig zwischen der zweiten Lage (5) und der ersten Aufnahmefläche (3A) angeordnet ist,
   - anschließend der Schichtstoff (1) auf einen als "Kern" (10) bezeichneten zweiten Träger (10) übertragen wird, der eine zweite Aufnahmefläche (10A) mit einer auf einer zentralen Achse (Z10) zentrierten Rotationsform aufweist, wobei die Übertragung durch Anlegen der zweiten Fläche (1B) des Schichtstoffs (1) an die zweite Aufnahmefläche (10A) des Kerns (10) und durch Aufwickeln des Schichtstoffs (1) auf den Umfang der zweiten Aufnahmefläche (10A) erfolgt, bis die zweite vordere Front (5F) eine Verbindung mit der zweiten hinteren Front (5R) bildet und so die zweite Lage (5) in sich selbst schließt und bis die erste vordere Front (4F) eine Verbindung mit der ersten hinteren Front (4R) bildet und so die erste Lage (4) in sich selbst schließt, um so den Schichtstoff (1) in einem Ring um die zentrale Achse des Kerns (Z10) in sich selbst zu schließen.

2. Verfahren nach Anspruch 1, **dadurch gekennzeichnet, dass** auf dem ersten Träger (3) die zweite Lage (5) einen Längsversatz (d0) in Bezug auf die erste Lage (4) aufweist, sodass, wenn man den Schichtstoff (1) entlang der Längsrichtung (L0) in einer als "Konfektionsrichtung" (F1) bezeichneten ersten Richtung (F1) durchläuft, die erste vordere Front (4F), mit der die erste Lage (4) beginnt, der zweiten vorderen Front (5F), mit der die zweite Lage (5) beginnt, vorausgeht, sodass die erste Lage (4) zwischen der ersten vorderen Front (4F) und der zweiten vorderen Front (5F) sichtbar bleibt und nicht von der zweiten Lage (5) bedeckt wird, während die erste hintere Front (4R), mit der die erste Lage (4) endet, der zweiten hinteren Front (5R), mit der die zweite Lage (5) endet, vorausgeht, sodass die zweite Lage (5) die erste hintere Front (4R) der ersten Lage bedeckt und längs über die erste Lage (4) hinausragt, und dadurch, dass die Übertragung auf den Kern (10) in einer Aufwickelbewegung (R3_R, R10) erfolgt, die so gerichtet ist, dass der fortschreitende Kontakt zwischen dem Kern (10) und dem Schichtstoff (1) entlang der Längsrichtung (L0) in einer zur ersten Richtung (F1) entgegengesetzten und als "Anbringungsrichtung bei der Übertragung" (F2) bezeichneten zweiten Richtung (F2) erfolgt, sodass die Übertragung durch die zweite hintere Front (5R) der zweiten Lage (5) begonnen wird und die Übertragung durch die erste vordere Front (4F) der ersten Lage (4) beendet wird, nachdem auf den Kern (10) aufeinanderfolgend die erste hintere Front (4R) der ersten Lage (4) und anschließend die zweite vordere Front (5F) der zweiten Lage gelegt wurde.

3.  Verfahren nach Anspruch 1 oder 2, **dadurch gekennzeichnet, dass** die erste Lage (4) hergestellt wird, indem auf die erste Aufnahmefläche (3A) eine erste Folge von Streifen (6) gelegt wird, die aneinandergefügt werden, und dass die zweite Lage (5) hergestellt wird, indem auf die erste Lage (4) eine zweite Folge von Streifen (7) gelegt wird, die aneinandergefügt werden.

4.  Verfahren nach Anspruch 3, **dadurch gekennzeichnet, dass** die Streifen (6), die die erste Lage (4) bilden, in einem als "erster Lagenwinkel" (A6) bezeichneten ersten Winkel ungleich Null in Bezug auf die Längsrichtung (L0) verlegt sind, während die Streifen (7), die die zweite Lage (5) bilden, in einem als "zweiter Lagenwinkel" (A7) bezeichneten zweiten Winkel verlegt sind, der sich vom ersten Lagenwinkel (A6) unterscheidet und beispielsweise denselben Wert wie der erste Lagenwinkel mit entgegengesetztem Vorzeichen aufweist, sodass die Streifen (7) die die zweite Lage (5) bilden, mit den Streifen (6), die die erste Lage (4) bilden, eine Kreuzstruktur bilden.

5.  Verfahren nach Anspruch 4 und Anspruch 2, **dadurch gekennzeichnet, dass** der erste Lagenwinkel (A6) der ersten Lage (4) eine erste abgeschrägte Spitze (4T) verleiht, die durch die erste vordere Front (4F) der ersten Lage (4) begrenzt ist und sich in der Längsrichtung (L0) über eine als "Länge der ersten Spitze" (L_4T) bezeichnete Länge erstreckt, dass der zweite Lagenwinkel (A7) der zweiten Lage (5) eine zweite abgeschrägte Spitze (5T) verleiht, die durch die zweite vordere Front (5F) begrenzt ist, und dass die zweite abgeschrägte Spitze (5T) in der Konfektionsrichtung (F1) um einen Längsversatzwert (d0), der größer als die Länge (L_4T) der ersten Spitze (4T) ist, gegenüber der ersten abgeschrägten Spitze (4T) zurückgesetzt ist.

6.  Verfahren nach Anspruch 5, **dadurch gekennzeichnet, dass** die Streifen (6), die die erste Lage (4) bilden, gemäß einem als "Schritt der ersten Lage" (P6) bezeichneten konstanten Wiederholungsschritt (P6) nebeneinanderliegen und dass der Längsversatz (d0) zwischen der ersten Spitze (4T) und der zweiten Spitze (5T) einem Schritt entspricht, der gleich der Summe der Länge der ersten Spitze (L_4T) und einem zusätzlichen Wert (d_add) ist, wobei der zusätzliche Wert (d_add) zwischen 20 % und 80 % des Schritts der ersten Lage (P6), vorzugsweise zwischen 30 % und 75 % des Schritts der ersten Lage (P6) und besonders vorzugsweise 50 % des Schritts der ersten Lage (P6) beträgt.

7.  Verfahren nach einem der vorangehenden Ansprüche, **dadurch gekennzeichnet, dass** der erste Träger (3) durch einen zylindrischen Mantel (3) mit kreisförmiger Grundfläche gebildet wird, der auf einer als "zentrale Mantelachse" (Z3) bezeichneten Achse zentriert ist, deren radial äußere Oberfläche die erste Aufnahmefläche (3A) bildet und deren Umfang strikt größer als der Umfang des Kerns (10) ist, und dass die Übertragung erfolgt, indem der Mantel (3), der den Schichtstoff (1) trägt, gegen den Kern (10) gedrückt wird, sodass der Schichtstoff (1) sandwichartig zwischen der ersten Aufnahmefläche (3A) des Mantels und der zweiten Aufnahmefläche (10A) des Kerns angeordnet wird, und indem anschließend der Mantel (3) und der Kern (10) in eine relative Gegenrotationsbewegung (R3_R, R10) versetzt werden.

8.  Verfahren nach Anspruch 7, **dadurch gekennzeichnet, dass** zum Antreiben des Mantels (3) in Drehung (R3_F, R3_R) ein Antriebssystem (21) verwendet wird, das ein Antriebsritzel (22) aufweist, das mit einem fest mit dem Mantel (3) verbundenen Zahnkranz (23) kämmt, wobei der Zahnkranz auf der zentralen Achse (Z3) des Mantels zentriert und so angeordnet ist, dass der Radius seines mit dem Antriebsritzel (22) kämmenden Teilkreises zwischen 50 % und 100 %, vorzugsweise zwischen 60 % und 95 %, und besonders vorzugsweise zwischen 62 % und 75 % des Gesamtradius (R3) der die erste Aufnahmefläche (3A) bildenden radial äußeren Oberfläche des Mantels beträgt.

9.  Verfahren nach Anspruch 7 oder 8, **dadurch gekennzeichnet, dass** der Kern (10) eine gewölbte toroidale Form aufweist, sodass die zweite Aufnahmefläche (10A) im Querschnitt in einer Ebene, die die zentrale Achse des Kerns (Z10) enthält, ein konvex gekrümmtes Profil in Bezug auf die Außenseite aufweist, und dass gleichzeitig mit der Gegenrotationsbewegung (R3_R, R10), die es ermöglicht, den Schichtstoff (1) in Längsrichtung vom Mantel (3) abzuwickeln, um ihn auf den Umfang des Kerns (10) aufzuwickeln, der Mantel (3) in einer Rollkippbewegung ($\beta$) bewegt wird, um den vom Mantel (3) ausgeübten Auflagedruck zu einer Seite der Breite des konvex gekrümmten Profils der zweiten Aufnahmefläche (10A) des toroidalen Kerns zu verlagern.

10. Verfahren nach einem der vorangehenden Ansprüche **dadurch gekennzeichnet, dass**, um zunächst die erste und die zweite Lage (4, 5) herzustellen und um anschließend den ersten Träger (3) zu bewegen und ihn in Kontakt mit dem zweiten Träger (10) zu bringen, um die Übertragung des Schichtstoffs (1) zu bewirken, derselbe Roboterarm (16) verwendet wird und dass der Roboterarm (16) zu diesem Zweck über eine automatisierte Werkzeugwechselstation (30) verfügt, in der er ein Legewerkzeug (12), das dazu angeordnet ist, die erste und die zweite Lage (4, 5) auf dem ersten Träger 3 herzustellen, vorzugsweise durch das Verlegen von nebeneinanderliegenden Streifen (6, 7), gegen ein Greifwerkzeug (31) auszutauschen, das dazu angeordnet ist, den ersten Träger (3) zu greifen und zu manipulieren, um den ersten Träger (3) bis zum Kern (10) transportieren und anschließend die Übertragung des Schichtstoffs (1) auf den Kern (10) durchführen zu können.

**11.** Verfahren nach Anspruch 3 und 7, **dadurch gekennzeichnet, dass** eine abgewickelte Länge der ersten Lage (L4), die man der ersten Lage (4) bei ihrer Herstellung durch Verlegen der ersten Folge von Streifen (6) auf dem Mantel (3) verleihen möchte, und eine abgewickelte Länge der zweiten Lage (L5), die man der zweiten Lage (5) bei ihrer Herstellung durch Verlegen der zweiten Folge von Streifen (7) auf dem Mantel (3) verleihen möchte, definiert wird und dass folglich ein erster Verlegewinkelschritt (P6_angular) berechnet wird, der dem Schritt der ersten Lage (P6) entspricht, gemäß dem die Streifen (6), die die erste Lage (4) bilden, nacheinander um die zentrale Achse des Mantels (Z3) gelegt werden, sodass der erste Verlegewinkelschritt (P6_angular) es ermöglicht, die gewünschte abgewickelte Länge (L4) der ersten Lage mit einer ganzen Anzahl von Streifen (6) zu erhalten, und dass in gleicher Weise ein zweiter Verlegewinkelschritt (P7_angular) berechnet wird, der dem Schritt der zweiten Lage (P7) entspricht, gemäß dem die Streifen (7), die die zweite Lage (5) bilden, nacheinander um die zentrale Achse des Mantels (Z3) gelegt werden, sodass der zweite Verlegewinkelschritt (P7_angular) es ermöglicht, die gewünschte abgewickelte Länge (L5) der zweiten Lage mit einer zweiten ganzen Anzahl von Streifen (7) zu erhalten, und dass bei der Definition des zweiten Verlegewinkelschritts (P7_angular) die Zunahme des scheinbaren Verlegedurchmessers auf dem Mantel (3) berücksichtigt wird, der mit der Dicke (H4) der ersten Lage (4) zusammenhängt, die zum Zeitpunkt der Herstellung der zweiten Lage (5) bereits auf der ersten Aufnahmefläche (3A) des Mantels vorhanden ist.

**12.** Verfahren nach einem der vorangehenden Ansprüche **dadurch gekennzeichnet, dass** vor der Herstellung der ersten und der zweiten Lage (4, 5) beispielsweise mit Hilfe eines mechanischen oder optischen Tasters eine Messung des Radius, des Durchmessers (D10) oder des Umfangs des Kerns (10) vorgenommen wird, um die als "effektive Länge der zweiten Aufnahmefläche" (L10) bezeichnete abgewickelte Länge (L10) des Umfangs der zweiten Aufnahmefläche (10A) zu bestimmen, und während des Schritts der Herstellung der ersten und der zweiten Lage (4, 5) in Abhängigkeit von dieser effektiven Länge der zweiten Aufnahmefläche (L10) die Längen (L4, L5) angepasst werden, die jeweils der ersten und der zweiten Lage verliehen werden, wenn die erste und die zweite Lage (4, 5) auf der ersten Aufnahmefläche (3A) gebildet werden.

**13.** Verfahren zur Herstellung eines Luftreifens, bei dem nach einem der Ansprüche 1 bis 12 ein Schichtstoff (1) hergestellt wird, der eine erste Lage (4), die aus einer Folge von Streifen (6) auf der Basis von Rohgummi gebildet ist und vorzugsweise endlose Verstärkungsdrähte (8) enthält, die parallel in Richtung der Länge der Streifen (6) angeordnet sind, und eine zweite Lage (5), die aus einer Folge von Streifen (7) auf der Basis von Rohgummi gebildet ist und vorzugsweise endlose Verstärkungsdrähte (8) enthält, die parallel in Richtung der Länge der Streifen (7) angeordnet sind, umfasst, und anschließend der Schichtstoff (1) auf den Kern (10) übertragen und der Kern (10) in eine Aushärtungsform gelegt wird, um den Schichtstoff (1) zu vulkanisieren.

## Claims

**1.** Method for manufacturing an annular laminate (1) suitable for use in the formation of a tyre, in particular a pneumatic tyre, during which:

- a first ply (4), extending in a longitudinal direction (L0) from a first leading edge (4F) to a first trailing edge (4R), is produced on a first support (3) having a first receiving surface (3A),
- then, on the same first support (3), a second ply (5) is produced on top of the first ply (4), extending in the longitudinal direction (L0) from a second leading edge (5F) to a second trailing edge (5R), so that a laminate (1) is obtained on the first support (3A), the thickness (H1) of which extends from a first face (1A), applied against the first receiving surface (3A), to an opposite second face (1B), and comprising, in said thickness (H1), at least a first layer, formed by the first ply (4), and a second layer, formed by the second ply (5), so that the first ply (4) is sandwiched between the second ply (5) and the first receiving surface (3A),
- said laminate (1) is then transferred to a second support (10), known as the "core" (10), having a second receiving surface (10A) exhibiting symmetry of revolution centred on a central axis (Z10), said transfer being carried out by applying the second face (1B) of the laminate (1) against the second receiving surface (10A) of the core (10) and wrapping said laminate (1) on the circumference of said second receiving surface (10A) until the second leading edge (5F) forms a join with the second trailing edge (5R), thus closing the second ply (5) on itself, and the first leading edge (4F) forms a join with the first trailing edge (4R), thus closing the first ply (4) on itself, so that said laminate (1) is closed on itself in a ring about the central axis of the core (Z10).

2. Method according to Claim 1, **characterized in that**, on the first support (3), the second ply (5) has a longitudinal offset (d0) relative to the first ply (4), so that, travelling along the laminate (1) along the longitudinal direction (L0) in a first direction (F1), known as the "assembly direction" (F1), the first leading edge (4F), with which the first ply (4) starts, precedes the second leading edge (5F), with which the second ply (5) starts, so that the first ply (4) remains visible and not covered by the second ply (5) between the first leading edge (4F) and the second leading edge (5F), while the first trailing edge (4R), with which the first ply (4) ends, precedes the second trailing edge (5R), with which the second ply (5) ends, so that the second ply (5) covers the first trailing edge (4R) of the first ply, and extends longitudinally beyond the first ply (4), and **in that** the transfer onto the core (10) takes place in a wrapping movement (R3_R, R10) directed so that the progressive contact between the core (10) and the laminate (1) occurs, along the longitudinal direction (L0), in a second direction (F2) opposite to the first direction (F1), and known as the "transfer application direction" (F2), so that the transfer starts with the second trailing edge (5R) of the second ply (5) and said transfer ends with the first leading edge (4F) of the first ply (4) when the first trailing edge (4R) of the first ply (4) and then the second leading edge (5F) of the second ply (5) have been successively laid on the core (10).

3. Method according to Claim 1 or 2, **characterized in that** the first ply (4) is produced by laying a first series of strips (6) on the first receiving surface (3A) and butting them against one another, and the second ply (5) is produced by laying a second series of strips (7) on the first ply (4) and butting them against one another.

4. Method according to Claim 3, **characterized in that** the strips (6) forming the first ply (4) are laid at a first angle known as the "first ply angle" (A6), non-zero relative to the longitudinal direction (L0), while the strips (7) forming the second ply (5) are laid at a second angle, known as the "second ply angle" (A7), different from the first ply angle (A6), for example having the same value as the first ply angle, with the opposite sign, so that the strips (7) forming the second ply (5) form a crossed structure with the strips (6) forming the first ply (4).

5. Method according to Claim 4 and Claim 2, **characterized in that** the first ply angle (A6) gives the first ply (4) a first bevelled tip (4T) that is delimited by the first leading edge (4F) of said first ply (4) and extends, in the longitudinal direction (L0), over a length known as the "first tip length" (L_4T), and **in that** the second ply angle (A7) gives the second ply (5) a second bevelled tip (5T) delimited by the second leading edge (5F), and **in that** the second bevelled tip (5T) is placed set back from the first bevelled tip (4T), in the assembly direction (F1), by a longitudinal offset value (d0) greater than the length (L_4T) of the first tip (4T).

6. Method according to Claim 5, **characterized in that** the strips (6) forming the first ply (4) are juxtaposed, in the longitudinal direction (L0), at a constant repeat pitch (P6), known as the "first ply pitch" (P6), and **in that** the longitudinal offset (d0) between the first tip (4T) and the second tip (5T) corresponds to a distance equal to the sum of the first tip length (L_4T) and an additional value (d_add), said additional value (d_add) being between 20% and 80% of the first ply pitch (P6), preferably between 30% and 75% of the first ply pitch (P6), and more preferably 50% of the first ply pitch (P6).

7. Method according to one of the preceding claims, **characterized in that** the first support (3) is formed by a circular cylindrical hoop (3), centred on an axis known as the "central hoop axis" (Z3), the radially outer surface of which forms the first receiving surface (3A), and the circumference of which is strictly greater than the circumference of the core (10), and **in that** the transfer is carried out by applying said hoop (3) holding the laminate (1) against the core (10) so that the laminate (1) is sandwiched between the first receiving surface (3A) of the hoop and the second receiving surface (10A) of the core, and then setting the hoop (3) and the core (10) in relative counter-rotational motion (R3_R, R10).

8. Method according to Claim 7, **characterized in that** the hoop (3) is rotated (R3_F, R3_R) by a drive system (21) including a drive sprocket (22) that meshes on a ring gear (23) rigidly connected to the hoop (3), said ring gear being centred on the central axis (Z3) of the hoop, and arranged so that the radius of its pitch circle for meshing with the drive sprocket (22) is between 50% and 100%, preferably between 60% and 95%, and more preferably between 62% and 75% of the overall radius (R3) of the radially outer surface of the hoop forming the first receiving surface (3A).

9. Method according to Claim 7 or 8, **characterized in that** the core (10) has a curved toroidal shape so that the second receiving surface (10A) has, in cross-section in a plane containing the central axis (Z10) of the core, a convex curved profile relative to the exterior, and **in that**, simultaneously with the counter-rotational movement (R3_R, R10) making it possible to longitudinally unwrap the laminate (1) from the hoop (3) in order to wrap it on the circumference of the core (10), a roll-tilting movement ($\beta$) is imparted to the hoop (3), so as to move the bearing pressure exerted by the hoop (3) towards one side of the width of the convex curved profile of the second receiving surface (10A) of the toroidal core.

10. Method according to one of the preceding claims, **characterized in that** the same robotic arm (16) is used to first of all produce the first and second plies (4, 5), and then to move the first support (3) and bring it into contact with the second support (10) in order to transfer the laminate (1), and **in that** said robotic arm (16) has to this end an automated tool changing station (30), at which it can swap a laying tool (12), arranged to assemble the first and second plies (4, 5) on the first support (3), preferably by laying juxtaposed strips (6, 7), for a gripper tool (31), arranged to grasp and handle the first support (3) so that it can transport said first support (3) to the core (10) and then transfer the laminate (1) onto said core (10).

11. Method according to Claims 3 and 7, **characterized in that** a first ply developed length (L4) is defined, to be given to the first ply (4) when it is produced by laying the first series of strips (6) on the hoop (3), together with a second ply developed length (L5), to be given to the second ply (5) when it is produced by laying the second series of strips (7) on the hoop (3), and a first angular laying pitch (P6_angular) is calculated accordingly, corresponding to the first ply pitch (P6) at which the strips (6) forming the first ply (4) are positioned one after the other, about the central axis (Z3) of the hoop, so that said first angular laying pitch (P6_angular) makes it possible to obtain the desired first ply developed length (L4) with a first whole number of strips (6) and, likewise, a second angular laying pitch (P7_angular) is calculated, corresponding to the second ply pitch (P7) at which the strips (7) forming the second ply (5) are positioned one after the other, about the central axis (Z3) of the hoop, so that said second angular laying pitch (P7_angular) makes it possible to obtain the desired second ply developed length (L5) with a second whole number of strips (7), and **in that**, in order to define the second angular laying pitch (P7_angular), the increase in the visible laying diameter on the hoop (3) is taken into consideration, which increase is linked to the thickness (H4) of the first ply (4) already present on the first receiving surface (3A) of the hoop when the second ply (5) is produced.

12. Method according to one of the preceding claims, **characterized in that**, prior to the production of the first and second plies (4, 5), the radius, the diameter (D10) or the circumference of the core (10) is measured, for example using a mechanical or optical feeler, in order to determine the developed length (L10) of the circumference of the second receiving surface (10A), known as the "actual second receiving surface length" (L10), and, during the step of producing the first and second plies (4, 5), the lengths (L4, L5) given to the first and second plies respectively are adjusted as a function of this actual second receiving surface length (L10) when said first and second plies (4, 5) are formed on the first receiving surface (3A).

13. Method for manufacturing a pneumatic tyre during which, according to any one of Claims 1 to 12, a laminate (1) is produced comprising a first ply (4) formed by a series of uncured rubber-based strips (6), preferably containing continuous reinforcing threads (8) arranged parallel in the direction of the length of said strips (6), and a second ply (5) formed by a series of uncured rubber-based strips (7), preferably containing continuous reinforcing threads (8) arranged parallel in the direction of the length of said strips (7), and said laminate (1) is then transferred onto the core (10), and said core (10) is placed in a curing mould in order to vulcanize said laminate (1).

FIG. 1

FIG. 2A

FIG. 2B

EP 4 076 923 B1

FIG. 3

FIG. 4

FIG. 5

FIG. 6

FIG. 7A        FIG. 7B

FIG. 8A     FIG. 8B     FIG. 8C     FIG. 8D     FIG. 8E

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016229139 A1